# EUROPEAN PATENT APPLICATION

(11) **EP 4 299 677 A1**
(43) Date of publication of application: **03.01.2024**
(21) Application number: 22759829.9
(22) Date of filing: 25.02.2022
(51) Int. Cl.: C08L 83/04, C08L 71/00

(54) **SURFACE TREATMENT AGENT**

(30) Priority: 26.02.2021 JP 2021030453
(71) Applicant: Daikin Industries, Ltd., Osaka-shi, Osaka 530-0001 (JP)
(72) Inventor: SHIBUTANI, Shota, Osaka-shi, Osaka 530-0001 (JP); OKUNO, Shingo, Osaka-shi, Osaka 530-0001 (JP)
(74) Representative: Hoffmann Eitle
(86) International application number: PCT/JP2022/008033
(87) International publication number: WO 2022/181795

(57) **Abstract**

The present invention relates to a composition comprising a (A) fluoropolyether group-containing polymer and a (B) siloxane polymer, wherein the fluoropolyether group-containing polymer is a copolymer represented by the following formula (1) or (2):

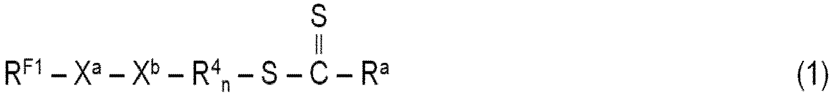

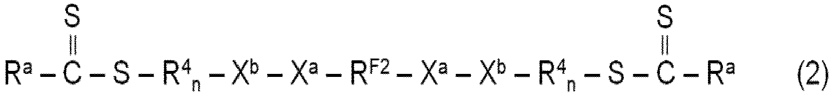

## Description

### Technical Field

The present disclosure relates to a surface-treating agent comprising a fluoropolyether group-containing polymer and a siloxane polymer.

### Background Art

Certain types of fluorine-containing compounds are known to be capable of providing excellent water-repellency, oil-repellency, antifouling property, and the like when used in surface treatment of a substrate. Patent Literature 1 discloses a composition comprising a fluorine-containing polymer and a silicon-containing polymer that can provide a surface-treating layer with excellent friction durability.

### Citation List

### Patent Literature

Patent Literature 1: JP 2014-198850 A

### Summary of Invention

### Technical Problem

Although the composition described in the above-described Patent Literature 1 can provide the substrate with functions such as water- and oil-repellency, it is sometimes insufficient to meet the gradually increasing demand for surface lubricity.

An object of the present disclosure is to provide a surface-treating agent comprising a fluorine-containing polymer and a silicon-containing polymer that provides a substrate with high surface lubricity in addition to water- and oil-repellency, and also has excellent solubility in a solvent.

### Solution to Problem

The present disclosure includes the following embodiments.
[1] A composition comprising a (A) fluoropolyether group-containing polymer and a (B) siloxane polymer, wherein
   the fluoropolyether group-containing polymer is a copolymer represented by the following formula (1) or (2): 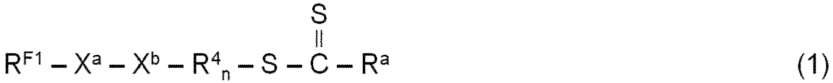 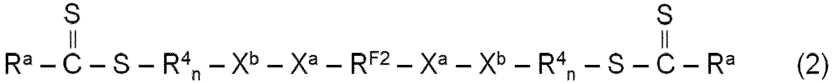 wherein
   R^{F1} is Rf²-R^{F}-O_{q}-;
   R^{F2} is -Rf²ₚ-R^{F}-O_{q}-;
   Rf¹ is a C₁₋₁₆ alkyl group optionally substituted with one or more fluorine atoms;
   Rf² is a C₁₋₆ alkylene group optionally substituted with one or more fluorine atoms;
   R^{F} is each independently a divalent fluoropolyether group;
   p is 0 or 1;
   q is each independently 0 or 1;
   R⁴ is each independently at each occurrence R^{4a} or R^{4b};
   R^{4a} is each independently at each occurrence a divalent organic group having a crosslinkable group;
   R^{4b} is each independently at each occurrence a divalent organic group not having a crosslinkable group;
   the crosslinkable group is: a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group; or a precursor group thereof;
   n is an integer of 1 to 100;
   X^{a} is each independently a divalent organic group;
   X^{b} is each independently a divalent organic group;
   R^{a} is each independently an alkyl, phenyl, -SR^{a1}, -OR^{a2}, -NR^{a3}₂, 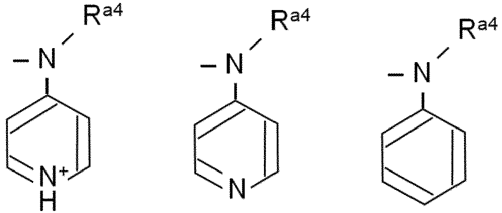 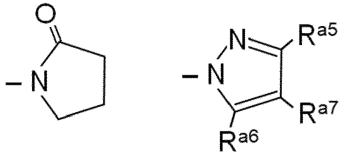
   R^{a1}, R^{a2}, R^{a3}, R^{a4}, R^{a5}, and R^{a6} are each independently an alkyl group or a phenyl group; and
   R^{a7} is a hydrogen or halogen atom,
      and
   the siloxane polymer has a number average molecular weight of more than 350 and less than 10,000.
[2] The composition according to [1], wherein
   R^{F} is each independently a group represented by the formula:

      -(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

      wherein R^{Fa} is each independently at each occurrence a hydrogen atom, a fluorine atom, or a chlorine atom; and
   a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula.
[3] The composition according to [2], wherein R^{Fa} is a fluorine atom.
[4] The composition according to any one of [1] to [3], wherein
   R^{F} is each independently a group represented by the following formula (f1), (f2), (f3), (f4), or (f5) :

      -(OC₃F₆)_{d}-(OC₂F₄)ₑ- (f1)

      wherein d is an integer of 1 to 200, and e is 0 or 1;

      -(OC₄F₈)_{c}-(OC₃F₆)_{d}-(OC₂F₄)ₑ-(OCF₂)_{f}- (f2)

      wherein c and d are each independently an integer of 0 to 30;
   e and f are each independently an integer of 1 to 200;
   the sum of c, d, e, and f is an integer of 10 to 200; and
   the occurrence order of the respective repeating units enclosed in parentheses provided with the subscript c, d, e, or f is not limited in the formula;

      -(R⁶-R⁷)_{g}- (f3)

      wherein R⁶ is OCF₂ or OC₂F₄;
   R⁷ is a group selected from OC₂F₄, OC₃F₆, OC₄F₈, OC₅F₁₀, and OC₆F₁₂, or is a combination of two or three groups selected from these groups; and
   g is an integer of 2 to 100;

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)

      wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and

      -(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

      wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.
[5] The composition according to any one of [1] to [4], wherein R⁴ is R^{4a}.
[6] The composition according to any one of [1] to [5], wherein
   R^{4a} is a group represented by the following formula: 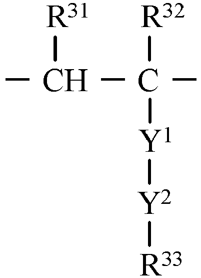 wherein
   R³¹ is each independently at each occurrence a hydrogen atom or an alkyl group;
   R³² is each independently at each occurrence a hydrogen atom, a chlorine atom, a fluorine atom, or an alkyl group optionally substituted with fluorine;
   R³³ is each independently at each occurrence a crosslinkable group;
   Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
   R^{c} is an organic group; and
   Y² is a single bond or a linker having 1 to 16 atoms in a main chain thereof.
[7] The composition according to any one of [1] to [6], wherein the crosslinkable group is an epoxy group, a glycidyl group, an alicyclic epoxy group, a vinyl group, an allyl group, an optionally substituted acryloyl group, a cinnamoyl group, a 2,4-hexadienoyl group, a vinyl ether group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, or a silane coupling group, or a precursor group thereof.
[8] The composition according to any one of [1] to [7], wherein the crosslinkable group is an epoxy group, a glycidyl group, an alicyclic epoxy group, an acryloyl group, or a methacryloyl group.
[9] The composition according to any one of [1] to [8], wherein n is an integer of 2 to 50.
[10] The composition according to any one of [1] to [9], wherein
   the siloxane polymer is a siloxane polymer represented by the following formula: 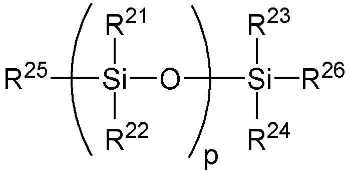 wherein
   R²¹ is each independently at each occurrence a hydrogen atom, a C₁₋₆ alkyl group, or an aryl group;
   R²² is each independently at each occurrence a hydrogen atom, a C₁₋₆ alkyl group, or an aryl group;
   R²³ is a hydrogen atom, a C₁₋₆ alkyl group, or an aryl group;
   R²⁴ is a hydrogen atom, a C₁₋₆ alkyl group, or an aryl group;
   R²⁵ is a hydrogen atom or a monovalent organic group;
   R²⁶ is a hydrogen atom or a monovalent organic group; and
   p is any integer.
[11] The composition according to [10], wherein R²⁵ and R²⁶ are each a C₁₋₆ alkyl group.
[12] The composition according to [10], wherein
   R²⁵ is a C₁₋₆ alkyl group;
   R²⁶ is -R²⁷-R²⁸;
   R²⁷ is a divalent organic group, an oxygen atom, or a single bond; and
   R²⁸ is a hydrogen atom, -OH, -CO-CH=CH₂, -CO-C(CH₃)=CH₂, an epoxy group, an alicyclic epoxy group, an amino group, a carboxyl group, a vinyl group, an alkoxy group, or a thiol group.
[13] The composition according to [10], wherein
   R²⁵ and R²⁶ are each -R²⁷-R²⁸;
   R²⁷ is a divalent organic group, an oxygen atom, or a single bond; and
   R²⁸ is a hydrogen atom, -OH, -CO-CH=CH₂, -CO-C(CH₃)=CH₂, an epoxy group, an alicyclic epoxy group, an amino group, a carboxyl group, a vinyl group, an alkoxy group, or a thiol group.
[14] The composition according to any one of [1] to [13], wherein the siloxane polymer has a number average molecular weight of 800 to 8,000.
[15] The composition according to any one of [1] to [14], wherein a content of the siloxane polymer is 1 to 300 parts by mass based on 100 parts by mass of the fluoropolyether group-containing polymer.
[16] A surface-treating agent comprising the composition according to any one of [1] to [15].
[17] A curable composition comprising:
   the composition according to any one of [1] to [15], the surface-treating agent according to [16]; and
   a matrix-forming composition.
[18] The curable composition according to [17], wherein the matrix-forming composition is an acrylic resin or an epoxy resin.
[19] A film formed of the composition according to any one of [1] to [15], the surface-treating agent according to [16], and/or the curable composition according to [17] or [18].
[20] An article comprising a substrate and a layer on a surface of the substrate, wherein the layer is formed of the composition according to any one of [1] to [15], the surface-treating agent according to [16], and/or the curable composition according to [17] or [18].
[21] The article according to [20], wherein the article is an optical member.
[22] The article according to [20], which is a LiDAR cover member.
[23] The article according to [20], which is a sensor member.
[24] The article according to [20], which is an instrument panel cover member.
[25] The article according to [20], which is an automobile interior member.

### Advantageous Effects of Invention

The surface-treating agent of the present disclosure provides a substrate with high surface lubricity in addition to water- and oil-repellency, and also has excellent solubility in a solvent.

### Description of Embodiments

The "monovalent organic group", as used herein, refers to a monovalent group containing carbon. The monovalent organic group may be a hydrocarbon group or a derivative thereof, unless otherwise specified. The derivative of hydrocarbon group refers to a group that has one or more of N, O, S, Si, amide, sulfonyl, siloxane, carbonyl, carbonyloxy, and the like at the end or in the molecular chain of the hydrocarbon group. The simple term "organic group" refers to a monovalent organic group. The term "divalent organic group" refers to a divalent group containing carbon. Examples of such a divalent organic group include, but are not limited to, a divalent group obtained by further removing one hydrogen atom from an organic group.

The term "hydrocarbon group", as used herein, refers to a group that contains carbon and hydrogen and that is obtained by removing one hydrogen atom from a hydrocarbon. Such a hydrocarbon group is not limited, and examples thereof include a C₁₋₂₀ hydrocarbon group optionally substituted with one or more substituents, such as an aliphatic hydrocarbon group and an aromatic hydrocarbon group. The above "aliphatic hydrocarbon group" may be either linear, branched, or cyclic, and may be either saturated or unsaturated. The hydrocarbon group may contain one or more ring structures.

The substituent of the "hydrocarbon group", as used herein, is not limited, and examples thereof include one or more groups selected from a halogen atom, and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5-to 10-membered heterocyclyl group, a 5- to 10-membered unsaturated heterocyclyl group, a C₆₋₁₀ aryl group, and a 5-to 10-membered heteroaryl group each optionally substituted with one or more halogen atoms.

### [Composition]

Hereinafter, a composition of the present disclosure will be described.

The composition of the present disclosure comprises a (A) fluoropolyether group-containing polymer and a (B) siloxane polymer.

### [(A) Fluoropolyether group-containing polymer]

The above fluoropolyether group-containing polymer is a copolymer represented by the following formula (1) or (2): 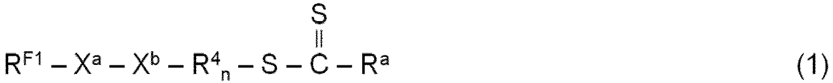 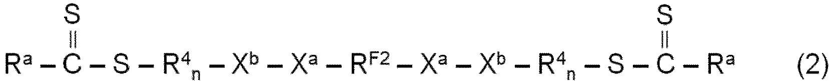 wherein
R^{F1} is Rf¹-R^{F}-O_{q}-;
R^{F2} is -Rf²ₚ-R^{F}-O_{q}-;
Rf¹ is a C₁₋₁₆ alkyl group optionally substituted with one or more fluorine atoms;
Rf² is a C₁₋₆ alkylene group optionally substituted with one or more fluorine atoms;
R^{F} is each independently a divalent fluoropolyether group;
p is 0 or 1;
q is each independently 0 or 1;
R⁴ is each independently at each occurrence R^{4a} or R^{4b};
R^{4a} is each independently at each occurrence a divalent organic group having a crosslinkable group;
R^{4b} is each independently at each occurrence a divalent organic group not having a crosslinkable group;
the above crosslinkable group is: a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group; or a precursor group thereof;
n is an integer of 1 to 100;
X^{a} is each independently a divalent organic group;
X^{b} is each independently a divalent organic group;
R^{a} is each independently an alkyl, phenyl, -SR^{a1}, -OR^{a2}, -NR^{a3}₂, 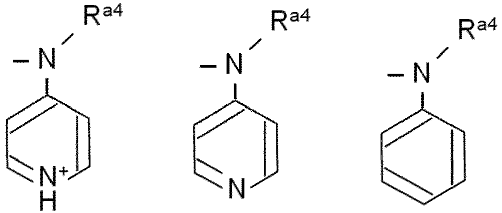 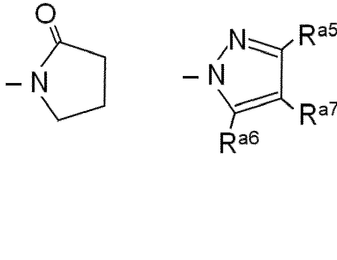
R^{a1}, R^{a2}, R^{a3}, R^{a4}, R^{a5}, and R^{a6} are each independently an alkyl group or a phenyl group; and
R^{a7} is a hydrogen or halogen atom.

In the above formula (1), R^{F1} is Rf¹-R^{F}-O_{q}-.

In the above formula (2), R^{F2} is -Rf²ₚ-R^{F}-O_{q}-.

In the above formula, Rf¹ is each independently a C₁₋₁₆ alkyl group optionally substituted with one or more fluorine atoms.

In the above C₁₋₁₆ alkyl group optionally substituted with one or more fluorine atoms, the "C₁₋₁₆ alkyl group" may be linear or branched, and is preferably a linear or branched C₁₋₆ alkyl group, in particular C₁₋₃ alkyl group, and more preferably a linear C₁₋₆ alkyl group, in particular linear C₁₋₃ alkyl group.

The above Rf¹ is preferably a C₁₋₁₆ alkyl group substituted with one or more fluorine atoms, more preferably a CF₂H-C₁₋₁₅ perfluoroalkylene group, and still more preferably a C₁₋₁₆ perfluoroalkyl group.

The above C₁₋₁₆ perfluoroalkyl group may be linear or branched, and is preferably a linear or branched C₁₋₆ perfluoroalkyl group, in particular C₁₋₃ perfluoroalkyl group, more preferably a linear C₁₋₆ perfluoroalkyl group, in particular linear C₁₋₃ perfluoroalkyl group, and specifically -CF₃, -CF₂CF₃, or -CF₂CF₂CF₃.

In the above formula, Rf² is a C₁₋₆ alkylene group optionally substituted with one or more fluorine atoms.

In the above C₁₋₆ alkylene group optionally substituted with one or more fluorine atoms, the "C₁₋₆ alkylene group" may be linear or branched, and is preferably a linear or branched C₁₋₃ alkylene group, and more preferably a linear C₁₋₃ alkylene group.

The above Rf² is preferably a C₁₋₆ alkylene group substituted with one or more fluorine atoms, more preferably a C₁₋₆ perfluoroalkylene group, and still more preferably a C₁₋₃ perfluoroalkylene group.

The above C₁₋₆ perfluoroalkylene group may be linear or branched, and is preferably a linear or branched C₁₋₃ perfluoroalkylene group, more preferably a linear C₁₋₃ perfluoroalkyl group, and specifically -CF₂-, -CF₂CF₂-, or - CF₂CF₂CF₂-.

In the above formula, p is 0 or 1. In one embodiment, p is 0. In another embodiment, p is 1.

In the above formulae, q is each independently 0 or 1. In one embodiment, q is 0. In another embodiment, q is 1.

In the above formulae (1) and (2), R^{F} is each independently a divalent fluoropolyether group.

R^{F} is preferably a group represented by the formula:

-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-

wherein
R^{Fa} is each independently at each occurrence a hydrogen atom, a fluorine atom, or a chlorine atom;
a, b, c, d, e, and f are each independently an integer of 0 to 200, and the sum of a, b, c, d, e, and f is 1 or more; and the occurrence order of the respective repeating units enclosed in parentheses provided with a, b, c, d, e, or f is not limited in the formula.

R^{Fa} is preferably a hydrogen atom or a fluorine atom, and more preferably a fluorine atom.

a, b, c, d, e, and f may be preferably, each independently, an integer of 0 to 100.

The sum of a, b, c, d, e, and f is preferably 5 or more and more preferably 10 or more, and it may be, for example, 15 or more or 20 or more. The sum of a, b, c, d, e, and f is preferably 200 or less, more preferably 100 or less, and still more preferably 60 or less, and it may be, for example, 50 or less or 30 or less.

These repeating units may be linear or branched. For example, in the above repeating units, -(OC₆F₁₂)- may be - (OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)-, -(OCF₂CF₂CF₂CF₂CF(CF₃))-, or the like. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, -(OCF₂CF₂CF(CF₃)CF₂)-, - (OCF₂CF₂CF₂CF(CF₃))-, or the like. -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)-, and -(OCF₂CF(C₂F₅))-. - (OC₃F₆)- (that is, in the above formula, R^{Fa} is a fluorine atom) may be any of -(OCF₂CF₂CF₂)-, -(OCF(CF₃)CF₂)-, and - (OCF₂CF(CF₃))-. -(OC₂F₄)- may be any of -(OCF₂CF₂)- and - (OCF(CF₃)) -.

In one embodiment, the above repeating units are linear. When the above repeating units are linear, the surface lubricity, friction durability, and the like of the surface-treating layer can be improved.

In one embodiment, the above repeating units are branched. When the above repeating units are branched, the dynamic friction coefficient of the surface-treating layer can be increased.

In one embodiment, R^{F} is each independently a group represented by any one of the following formulae (f1) to (f5) :

-(OC₃F₆)_{d}-(OC₂F₄)ₑ- (f1)

wherein d is an integer of 1 to 200, and e is 0 or 1;

-(OC₄F₈)_{c}-(OC₃F₆)_{d}-(OC₂F₄)ₑ-(OCF₂)_{f}- (f2)

wherein c and d are each independently an integer of 0 or more and 30 or less, and e and f are each independently an integer of 1 or more and 200 or less;
the sum of c, d, e, and f is 2 or more; and
the occurrence order of the respective repeating units enclosed in parentheses provided with the subscript c, d, e, or f is not limited in the formula;

   -(R⁶-R⁷)_{g}- (f3)

   wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups independently selected from these groups; and
g is an integer of 2 to 100;

   -(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1 or more and 200 or less, a, b, c, d, and f are each independently an integer of 0 or more and 200 or less, the sum of a, b, c, d, e, and f is at least 1, and the occurrence order of the respective repeating units enclosed in parentheses provided with a, b, c, d, e, or f is not limited in the formula; and

-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)

wherein f is an integer of 1 or more and 200 or less, a, b, c, d, and e are each independently an integer of 0 or more and 200 or less, the sum of a, b, c, d, e, and f is at least 1, and the occurrence order of the respective repeating units enclosed in parentheses provided with a, b, c, d, e, or f is not limited in the formula.

In the above formula (f1), d is preferably 5 to 200, more preferably 10 to 100, and still more preferably 15 to 50, and it is, for example, an integer of 25 to 35. In one embodiment, e is 0. In another embodiment, e is 1. The above formula (f1) is preferably a group represented by - (OCF₂CF₂CF₂)_{d}-(OCF₂CF₂)ₑ- or -(OCF(CF₃)CF₂)_{d}-(OCF(CF₃))ₑ-, and more preferably a group represented by -(OCF₂CF₂CF₂)_{d}-(OCF₂CF₂)ₑ-.

In the above formula (f2), e and f are each independently an integer of preferably 5 or more and 200 or less, and more preferably 10 to 200. Also, the sum of c, d, e, and f is preferably 5 or more and more preferably 10 or more, and it may be, for example, 15 or more or 20 or more. In one embodiment, the above formula (f2) is preferably a group represented by -(OCF₂CF₂CF₂CF₂)_{c}-(OCF₂CF₂CF₂)_{d}-(OCF₂CF₂)ₑ-(OCF₂)_{f}-. In another embodiment, the formula (f2) may be a group represented by -(OC₂F₄)ₑ-(OCF₂)_{f}-.

In the above formula (f3), R⁶ is preferably OC₂F₄. In the above (f3), R⁷ is preferably a group selected from OC₂F₄, OC₃F₆, and OC₄F₈, or a combination of two or three groups independently selected from these groups, and is more preferably a group selected from OC₃F₆ and OC₄F₈. The combination of two or three groups independently selected from OC₂F₄, OC₃F₆, and OC₄F₈ is not limited, and examples thereof include -OC₂F₄OC₃F₆-, -OC₂F₄OC₄F₈-, -OC₃F₆OC₂F₄-, - OC₃F₆OC₃F₆-, -OC₃F₆OC₄F₈-, -OC₄F₈OC₄F₈-, -OC₄F₈OC₃F₆-, - OC₄F₈OC₂F₄-, -OC₂F₄OC₂F₄OC₃F₆-, -OC₂F₄OC₂F₄OC₄F₈-, - OC₂F₄OC₃F₆OC₂F₄-, -OC₂F₄OC₃F₆OC₃F₆-, -OC₂F₄OC₄F₈OC₂F₄-, - OC₃F₆OC₂F₄OC₂F₄-, -OC₃F₆OC₂F₄OC₃F₆-, -OC₃F₆OC₃F₆OC₂F₄-, and - OC₄F₈OC₂F₄OC₂F₄-. In the above formula (f3), g is preferably an integer of 3 or more, and more preferably 5 or more. The above g is preferably an integer of 50 or less. In the above formula (f3), OC₂F₄, OC₃F₆, OC₄F₈, OC₅F₁₀, and OC₆F₁₂ may be either linear or branched, and are preferably linear. In this embodiment, the above formula (f3) is preferably - (OC₂F₄-OC₃F₆)_{g}- or -(OC₂F₄-OC₄F₈)_{g}-.

In the above formula (f4), e is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

In the above formula (f5), f is an integer of preferably 1 or more and 100 or less, and more preferably 5 or more and 100 or less. The sum of a, b, c, d, e, and f is preferably 5 or more, and more preferably 10 or more, and it is, for example, 10 or more and 100 or less.

In one embodiment, the above R^{F} is a group represented by the above formula (f1).

In one embodiment, the above R^{F} is a group represented by the above formula (f2).

In one embodiment, the above R^{F} is a group represented by the above formula (f3).

In one embodiment, the above R^{F} is a group represented by the above formula (f4).

In one embodiment, the above R^{F} is a group represented by the above formula (f5).

In the above R^{F}, the ratio of e to f (hereinafter, referred to as an "e/f ratio") is 0.1 to 10, preferably 0.2 to 5, more preferably 0.2 to 2, still more preferably 0.2 to 1.5, and even more preferably 0.2 to 0.85. With an e/f ratio of 10 or less, the lubricity, friction durability, and chemical resistance (such as durability against artificial sweat) of a surface-treating layer obtained from this compound are further increased. The smaller the e/f ratio is, the higher the lubricity and the friction durability of the surface-treating layer are. On the other hand, with an e/f ratio of 0.1 or more, the stability of the compound can be further increased. The larger the e/f ratio is, the more improved the stability of the compound is.

In one embodiment, the above e/f ratio is preferably 0.2 to 0.95, and more preferably 0.2 to 0.9.

In one embodiment, from the viewpoint of heat resistance, the above e/f ratio is preferably 1.0 or more, and more preferably 1.0 to 2.0.

In the above fluoropolyether group-containing compound, the number average molecular weight of the R^{F1} and R^{F2} moieties is not limited, and it is, for example, 500 to 30,000, preferably 1,500 to 30,000, and more preferably 2,000 to 10,000. Herein, the number average molecular weight of R^{F1} and R^{F2} is defined as a value obtained by ¹⁹F-NMR measurement.

In another embodiment, the number average molecular weight of the R^{F1} and R^{F2} moieties is 500 to 30,000, preferably 1,000 to 20,000, more preferably 2,000 to 15,000, and even more preferably 2,000 to 10,000, and it may be, for example, 3,000 to 6,000.

In another embodiment, the number average molecular weights of R^{F1} and R^{F2} moieties may be 4,000 to 30,000, preferably 5,000 to 10,000, and more preferably 6,000 to 10,000.

In the above formulae, R⁴ is each independently at each occurrence R^{4a} or R^{4b}.

The above R^{4a} is each independently at each occurrence a divalent organic group having a crosslinkable group.

The above crosslinkable group means a group that is capable of reacting under certain conditions and forming a crosslinked structure.

The above crosslinkable group is: preferably a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid-containing group, or a silane coupling group; or a precursor group thereof.

Examples of the above crosslinkable group include an epoxy group, a glycidyl group, an alicyclic epoxy group, a vinyl group, an allyl group, an optionally substituted acryloyl group, a cinnamoyl group, a 2,4-hexadienoyl group, a vinyl ether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, or a silane coupling group, or a precursor group thereof.

The above alicyclic epoxy group is preferably a group represented by the following formula: 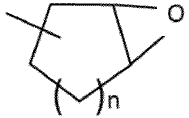 wherein n is an integer of 1 to 5.

The above alicyclic epoxy group is more preferably

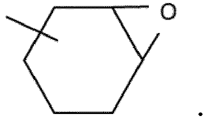

The above optionally substituted acryloyl group is a group represented by CH₂=CX¹-C(O)-.

The above X¹ represents a hydrogen atom, a chlorine atom, a fluorine atom, or an alkyl group having 1 to 10 carbon atoms optionally substituted with fluorine, and it is preferably an alkyl group having 1 to 10 carbon atoms, and more preferably an alkyl group having 1 to 3 carbon atoms, such as a methyl group.

The above optionally substituted acryloyl group is preferably an acryloyl group or a methacryloyl group. Hereinafter, an acryloyl group and a methacryloyl group are also collectively referred to as a "(meth)acryloyl group".

The above phosphoric acid-containing group is not limited as long as it contains a phosphoric acid group, and it may be a C₁₋₆ alkylene-OP (O) (OH) (OR) (wherein R is a hydrogen atom or a C₁₋₃ alkyl.) .

In one embodiment, the above crosslinkable group may be an epoxy group, a glycidyl group, an alicyclic epoxy group, a vinyl group, an allyl group, a (meth)acryloyl group, a cinnamoyl group, a 2,4-hexadienoyl group, or a vinyl ether (vinyloxy) group.

In a preferred embodiment, the above crosslinkable group is an epoxy group, a glycidyl group, or CH₂=CX^{1'}-C(O)-(wherein X^{1'} represents a hydrogen atom, a chlorine atom, a fluorine atom, or an alkyl group having 1 to 10 carbon atoms optionally substituted with fluorine), and it may be preferably an epoxy group, a glycidyl group, or a (meth)acryloyl group.

In another preferred embodiment, the above crosslinkable group may be an epoxy group, a glycidyl group, an alicyclic epoxy group, or a (meth)acryloyl group, preferably an epoxy group, a glycidyl group, or an alicyclic epoxy group, and more preferably an epoxy group or a glycidyl group.

In a preferred embodiment, R^{4a} is a group represented by the following formula: 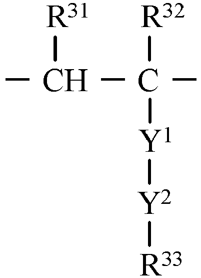 wherein
R³¹ is each independently at each occurrence a hydrogen atom or an alkyl group;
R³² is each independently at each occurrence a hydrogen atom, a chlorine atom, a fluorine atom, or an alkyl group optionally substituted with fluorine;
R³³ is each independently at each occurrence a crosslinkable group;
Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
R^{c} is an organic group; and
Y² is a single bond or a linker having 1 to 16 atoms in a main chain thereof.

In the above formula, R³¹ each independently at each occurrence represents a hydrogen atom or an alkyl group. The above alkyl group is preferably a C₁₋₆ alkyl group, more preferably a C₁₋₃ alkyl group, and still more preferably a methyl group or an ethyl group. R³¹ is preferably a hydrogen atom.

In the above formula, R³² each independently at each occurrence represents a hydrogen atom, a chlorine atom, a fluorine atom, or an alkyl group optionally substituted with fluorine. The above alkyl group is preferably a C₁₋₆ alkyl group, more preferably a C₁₋₃ alkyl group, and still more preferably a methyl group or an ethyl group. R³² is preferably a methyl group or a hydrogen atom, and more preferably a hydrogen atom.

The above R³³ is each independently at each occurrence a crosslinkable group. Such a crosslinkable group has the same definition as described above.

In a preferred embodiment, R³³ may be an epoxy group, a glycidyl group, an alicyclic epoxy group, a vinyl group, an allyl group, an optionally substituted acryloyl group, a cinnamoyl group, a 2,4-hexadienoyl group, a vinyl ether (vinyloxy) group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, or a silane coupling group, or a precursor group thereof.

In a more preferred embodiment, R³³ may be an epoxy group, a glycidyl group, an alicyclic epoxy group, a vinyl group, an allyl group, a (meth)acryloyl group, a cinnamoyl group, a 2,4-hexadienoyl group, or a vinyl ether (vinyloxy) group.

In a still more preferred embodiment, the above crosslinkable group may be an epoxy group, a glycidyl group, an alicyclic epoxy group, or a (meth)acryloyl group, and preferably an epoxy group, a glycidyl group, or a (meth)acryloyl group.

In the above formula, Y¹ is a single bond, -C(=O)O-, - C(=O)NH-, -OC(=O)-, -NHC(=O)-, -O-, -N(R^{c})-, phenylene, or carbazolylene. Here, R^{c} represents an organic group, and is preferably an alkyl group. The above alkyl group is preferably a C₁₋₆ alkyl group, more preferably a C₁₋₃ alkyl group, and still more preferably a methyl group or an ethyl group. As for these groups with respect to Y¹, the left side thereof is bonded to C in the formula, and the right side thereof is bonded to Y².

In one embodiment, Y¹ is -C(=O)O-, -C(=O)NH-, -OC(=O)-, -NHC(=O)-, -O-, -N(R^{c})-, phenylene, or carbazolylene. Here, R^{c} represents an organic group, and is preferably an alkyl group.

Y¹ is preferably -C(=O)O-, -O-, or carbazolylene, more preferably -C(=O)O- or -O-, and still more preferably - C(=O)O-.

In the above formula, Y² represents a single bond or a linker having 1 to 16, preferably 2 to 12, and more preferably 2 to 10 atoms in a main chain thereof. Here, the above main chain means the portion in Y² that links Y¹ and R³³ by the minimum number of atoms.

Examples of such Y² include, but are not limited to:
- (CH₂-CH₂-O)ₚ₁- (p1 represents an integer of 1 to 10, preferably an integer of 1 to 6, and more preferably an integer of 1 to 4);
- (CHR^{d})ₚ₂-O- (p2 is an integer of 1 to 40, preferably an integer of 1 to 10, more preferably an integer of 1 to 6, still more preferably an integer of 1 to 4, and still more preferably an integer of 2 to 4, and R^{d} represents hydrogen or a methyl group);
- (CH₂)ₚ₃-O-(CH₂)ₚ₄- (p3 is an integer of 1 to 10, preferably an integer of 1 to 6, and more preferably an integer of 1 to 4, and p4 is an integer of 0 to 10, preferably an integer of 0 to 6, and more preferably an integer of 0 to 4, and in one embodiment, represents an integer of 1 to 10, preferably an integer of 1 to 6, and more preferably an integer of 1 to 4);
- (CH₂-CH₂-O)ₚ₅-CO-NH-CH₂-CH₂-O- (p5 represents an integer of 1 to 10);
- (CH₂)ₚ₆- (p6 represents an integer of 1 to 6);
- (CH₂)ₚ₇-O-CONH-(CH₂)ₚ₈- (p7 represents an integer of 1 to 8, preferably 2 or 4, and p8 represents an integer of 1 to 6, preferably 3);
- (CH₂)ₚ₉-NHC(=O)O-(CH₂)ₚ₁₀- (p9 represents an integer of 1 to 6, preferably 3, and p10 represents an integer of 1 to 8, preferably 2 or 4); and
- O- (provided that Y¹ is not -O-) .

Examples of the preferred Y² include -(CH₂-CH₂-O)ₚ₂- (p1 represents an integer of 1 to 10), -(CHR^{d})ₚ₂-O- (p2 is an integer of 1 to 40, and R^{d} represents hydrogen or a methyl group), -(CH₂)ₚ₃-O-(CH₂)ₚ₄- (p3 is an integer of 1 to 10, and p4 represents an integer of 1 to 10), and -(CH₂)ₚ₇-O-CONH-(CH₂)ₚ₈- (p7 represents an integer of 1 to 8, preferably 2 or 4, and p8 represents an integer of 1 to 6, preferably 3). Note that, as for these groups, the left end thereof is bonded to the side of the molecular backbone (the side of Y¹), and the right end thereof is bonded to the side of the functional group selected from substituent group A (the side of R³³).

R^{4a} is still more preferably a group represented by the following formula: 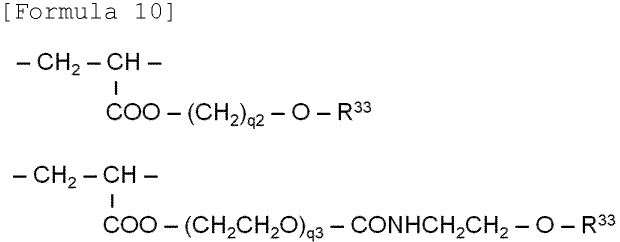 (wherein R³³ has the same definition as described above, q2 is an integer of 1 to 10, preferably an integer of 1 to 6, more preferably an integer of 1 to 4, and still more preferably an integer of 2 to 4, and q3 is an integer of 1 to 10, preferably an integer of 1 to 6, more preferably an integer of 1 to 4, and still more preferably an integer of 1 to 2.).

The above R^{4b} is each independently at each occurrence a divalent organic group not having a crosslinkable group.

R^{4b} is preferably -CHR^{4c}-CR^{4d}R^{4e}-. Here, R^{4c} and R^{4d} each independently represent a hydrogen atom or an alkyl group, and the R^{4e} group is -Y³-R^{4f}. Here, Y³ has the same definition as the above Y¹, and R^{4f} is an organic group not having a crosslinkable group, and is a group that a R^{4g} group described later is bonded via a linker or directly to Y³. That is, R^{4f} is -linker-R^{4g} or -R^{4g}.

Such a linker is preferably any of the following:
(a) -(CH₂-CH₂-O)ₛ₁- (s1 represents an integer of 1 to 10, preferably an integer of 1 to 6, and more preferably an integer of 1 to 4.);
(b) -(CHR^{4h})ₛ₂-O- (s2 is the number of repetitions, which is an integer of 1 to 40, preferably an integer of 1 to 10, more preferably an integer of 1 to 6, still more preferably an integer of 1 to 4, and still more preferably an integer of 2 to 4. R^{4h} represents hydrogen or a methyl group.);
(c) -(CH₂)ₛ₃-O-(CH₂)ₛ₄- (s3 is an integer of 1 to 10, preferably an integer of 1 to 6, and more preferably an integer of 1 to 4, and s4 is an integer of 0 to 10, preferably an integer of 0 to 6, and more preferably an integer of 0 to 4, and in one embodiment, represents an integer of 1 to 10, preferably an integer of 1 to 6, and more preferably an integer of 1 to 4);
(d) -(CH₂-CH₂-O)ₛ₁-CO-NH-CH₂-CH₂-O- (s1 has the same definition as described above.);
(e) -(CH₂)ₛ₅- (s5 represents an integer of 1 to 6.);
(f) -(CH₂)ₛ₆-O-CONH-(CH₂)ₛ₇- (s6 represents an integer of 1 to 8, preferably 2 or 4. s7 represents an integer of 1 to 6, preferably 3.); and
(g) -O- (provided that Y³ is not -O-) .

R^{4g} is preferably any of the following groups:
(i) an alkyl group
   examples: methyl, ethyl, propyl, isopropyl, butyl, isobutyl, tert-butyl, pentyl, hexyl, heptyl, octyl, dodecyl, octadecyl
(ii) a chain group containing an alkyl group substituted with fluorine
   examples: 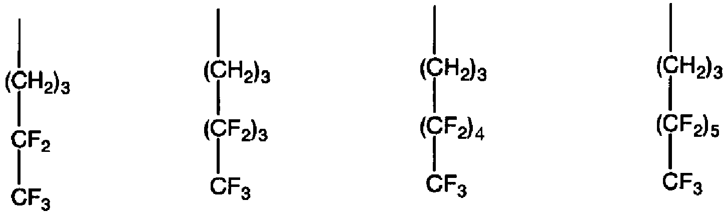 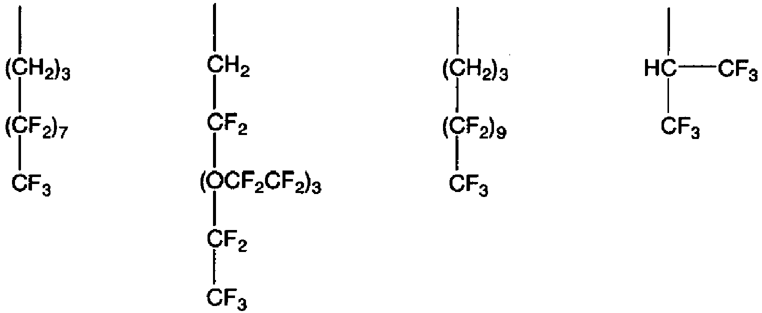 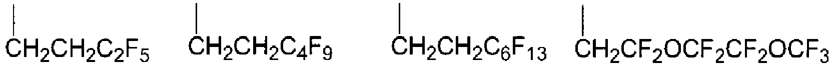 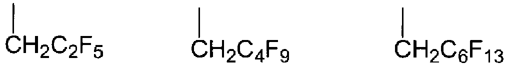 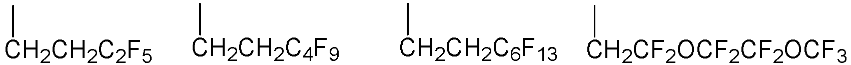 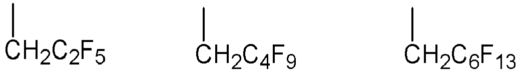
(iii) a group containing one or more cyclic moieties selected from the group consisting of a monocyclic carbocycle, a bicyclic carbocycle, a tricyclic carbocycle, and a tetracyclic carbocycle examples: 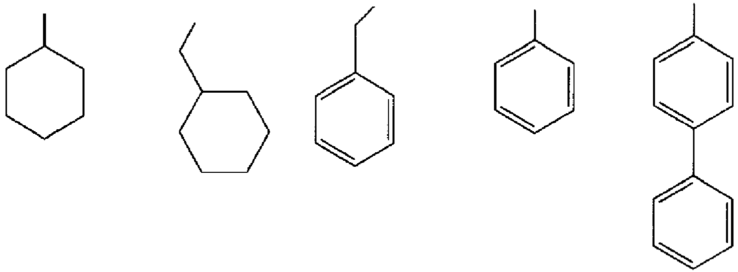 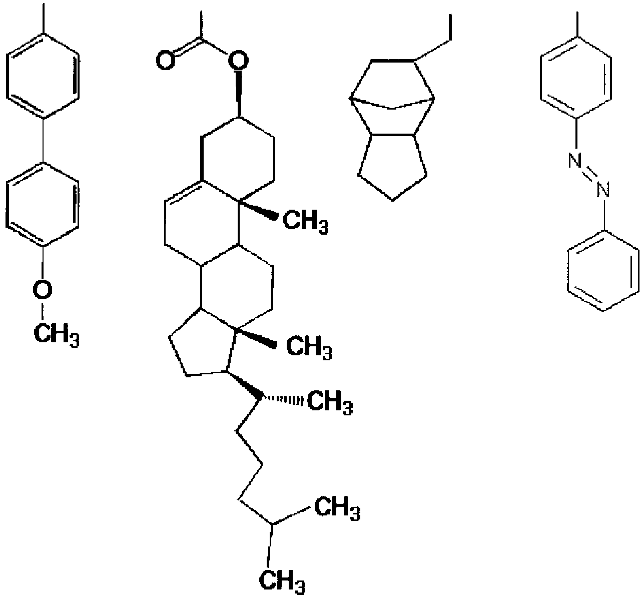
(iv) hydrogen (provided that the hydrogen atom is not bonded to the oxygen atom of the linker)
(v) a group containing an imidazolium salt examples: 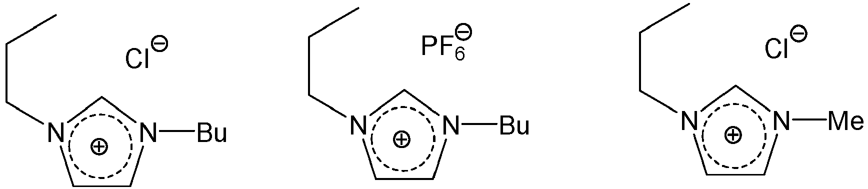 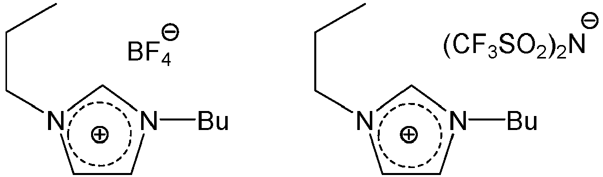 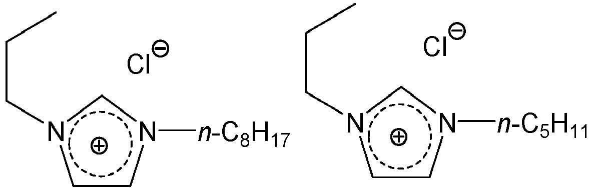
(vi) a group containing silicon

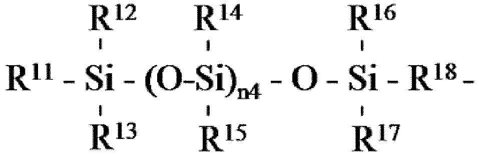

In the above formula, R¹¹, R¹², R¹³, R¹⁴, R¹⁵, R¹⁶, and R¹⁷ each independently represent an alkyl group or an aryl group.

Examples of the above alkyl group include, but are not limited to, an alkyl group having 1 to 10 carbon atoms and a cycloalkyl group having 3 to 20 carbon atoms. It is preferably an alkyl group having 1 to 6 carbon atoms, and specifically a n-butyl group for R¹¹ and a methyl group for R¹² to R¹⁷.

Examples of the above aryl group include, but are not limited to, an aryl group having 6 to 20 carbon atoms. Such an aryl group may contain 2 or more rings. The preferred aryl group is a phenyl group.

The above alkyl group and aryl group may contain a heteroatom such as a nitrogen atom, an oxygen atom, and a sulfur atom in their molecular chain or ring, if desired.

Furthermore, the above alkyl group and aryl group may be substituted with one or more substituents selected from a halogen; and a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5- to 10-membered heterocyclyl group, a 5- to 10-membered unsaturated heterocyclyl group, a C₆₋₁₀ aryl group, and a 5- to 10-membered heteroaryl group, each of which is optionally substituted with one or more halogens, if desired.

In the above formula, R¹⁸ represents a divalent organic group.

The above R¹⁸ is preferably -(CH₂)_{r"}- (wherein r" is an integer of 1 or more and 20 or less, preferably an integer of 1 or more and 10 or less), and is more preferably -(CH₂)_{r"}-(wherein r" is an integer of 1 or more and 10 or less).

In the above formula, n4 is each independently an integer of 1 or more and 500 or less. Such n4 is preferably an integer of 1 or more and 200 or less, and is more preferably 10 or more and 200 or less.

R^{4g} is more preferably a hydrogen atom (excluding hydrogen bonded to O to form a hydroxyl group) or an alkyl group that may be fluorinated and bonded via an ethylene chain or an oxyethylene chain; more preferably a hydrogen atom, a methoxyethyl group, an isobutyl group, or R⁴ⁱ-CF₂-(CF₂)ₛ₆-(CH₂)ₛ₇-O-(CH₂)₂- (R⁴ⁱ is a fluorine atom or a hydrogen atom, s6 is an integer of 0 to 6, and s7 is an integer of 1 to 6); and still more preferably a 3-(perfluoroethyl)propoxyethyl group [rational formula: CF₃-(CF₂)-(CH₂)₃-O-(CH₂)₂-] .

In the above R⁴, the constituent unit R^{4a} and the constituent unit R^{4b} may each form a block or may be bonded randomly.

In one embodiment, in R⁴, the constituent unit R^{4a} and the constituent unit R^{4b} each form a block.

In one embodiment, in R⁴, the constituent unit R^{4a} and the constituent unit R^{4b} are bonded randomly.

In one embodiment, R⁴ is R^{4a}. That is, R⁴ consists of the constituent unit R^{4a} having a crosslinkable group.

In a preferred embodiment, the number of R^{4a} (polymerization degree) is 1 to 100, preferably 2 to 70, more preferably 2 to 50, still more preferably 3 to 30, even more preferably 3 to 20, and particularly preferably 5 to 10.

In one embodiment, R⁴ is R^{4b}. That is, R⁴ consists of the constituent unit R^{4b} not having a crosslinkable group.

In a preferred embodiment, the number of R^{4b} (polymerization degree) is 1 to 100, preferably 2 to 70, more preferably 2 to 50, still more preferably 3 to 30, even more preferably 3 to 20, and particularly preferably 5 to 10.

In the above formula, n is an integer of 1 to 100, preferably an integer of 2 to 70, more preferably 2 to 50, still more preferably 3 to 30, even more preferably an integer of 3 to 20, and particularly preferably an integer of 5 to 10.

In the above formulae (1) and (2), X^{a} is each independently a divalent organic group.

In the above formulae (1) and (2), X^{b} is each independently a divalent organic group.

In the above formulae, -X^{a}-X^{b}- is understood to be part of a linker connecting R^{F1} or R^{F2} and R⁴ in the fluoropolyether group-containing polymers represented by the formulae (1) and (2). Accordingly, X^{a} and X^{b} may be any divalent organic group as long as the compounds represented by the formulae (1) and (2) can be stably present.

In one embodiment, X^{a} is each independently a group represented by the following formula:

-(Q)ₑ-(CFZ)_{f}-(CH₂)_{g}-.

In the formula, e, f, and g are each independently an integer of 0 to 10, the sum of e, f, and g is 1 or more, and the occurrence order of the respective repeating units enclosed in parentheses is not limited in the formula. Note that, as for the above group, the left side thereof is bonded to R^{F1} or R^{F2}, and the right side thereof is bonded to X^{b}.

In the above formula, Q is each independently at each occurrence an oxygen atom, phenylene, carbazolylene, -NR^{q}-(wherein R^{q1} represents a hydrogen atom or an organic group), or a divalent polar group. Preferably, Q is an oxygen atom or a divalent polar group.

Examples of the "divalent polar group" in the above Q include, but are not limited to, -C(O)-, -C(=NR^{b})-, and - C(O)NR^{q2}- (wherein R^{q2} represents a hydrogen atom or a lower alkyl group). The "lower alkyl group" is, for example, an alkyl group having 1 to 6 carbon atoms, such as methyl, ethyl, and n-propyl, which are optionally substituted with one or more fluorine atoms.

In the above formula, Z is each independently at each occurrence a hydrogen atom, a fluorine atom, or a lower fluoroalkyl group, and is preferably a fluorine atom. The "lower fluoroalkyl group" is, for example, a fluoroalkyl group having 1 to 6 carbon atoms and preferably 1 to 3 carbon atoms, preferably a perfluoroalkyl group having 1 to 3 carbon atoms, more preferably a trifluoromethyl group or pentafluoroethyl group, and still more preferably a trifluoromethyl group.

X^{a} is preferably a group represented by the following formula:

-(O)ₑ-(CF₂)_{f}-(CH₂)_{g}-

wherein e, f, and g have the same definition as described above, and the occurrence order of the respective repeating units enclosed in parentheses is not limited in the formula. Note that, as for this group, the left side thereof is bonded to R^{F1} or R^{F2}, and the right side thereof is bonded to X^{b}.

In one embodiment, X^{a} may be a group represented by

-(O)ₑ₁-(CH₂)_{g2}-O-[(CH₂)_{g3}-O-]_{g4},

or

- (O)ₑ₁-(CF₂)_{f2}-(CH₂)_{g2}-O-[(CH₂)_{g3}-O-]_{g4}

wherein
e1 is 0 or 1;
f2, g2, and g3 are each independently an integer of 1 to 10; and
g4 is 0 or 1.
As for these groups, the left side thereof is bonded to R^{F1} or R^{F2}, and the right side thereof is bonded to X^{b}.

In a preferred embodiment, X^{a} may be a group represented by

-(CH₂)_{g2}-O-

wherein g2 is an integer of 1 to 10. As for this group, the left side thereof is bonded to R^{F1} or R^{F2}, and the right side thereof is bonded to X^{b}.

In the above formulae, X^{b} is each independently a divalent organic group.

In one embodiment, X^{b} may be a group represented by the following formula:

-CO-R^{b3}-CR^{b1}R^{b2}-

wherein
R^{b1} and R^{b2} are each independently a hydrogen atom, a C₁₋₃ alkyl group, a phenyl group, or -CN; and
R^{b3} is a single bond or an optionally substituted C₁₋₆ alkylene group.
Note that, as for such a group, the left end thereof is bonded to X^{a} and the right end thereof is bonded to R⁴.

The above R^{b1} and R^{b2} are, each independently, preferably a C₁₋₃ alkyl group, a phenyl group, or -CN, and more preferably a C₁₋₃ alkyl group or -CN. The C₁₋₃ alkyl group is preferably a methyl group or an ethyl group, and more preferably a methyl group.

In one embodiment, R^{b1} is a C₁₋₃ alkyl group, preferably a methyl group, and R^{b2} is a hydrogen atom or -CN.

The substituent in the "optionally substituted C₁₋₆ alkylene group" in the above R^{b3} is preferably a C₁₋₃ alkyl group or a phenyl group, and preferably a C₁₋₃ alkyl group. The C₁₋₃ alkyl group is preferably a methyl group or an ethyl group, and more preferably a methyl group. The number of the substituents may be one or two or more.

The C₁₋₆ alkylene group in the above R^{b3} may be preferably a C₁₋₃ alkylene group, and more preferably a C₂₋₃ alkylene group, such as a dimethylene group.

In one embodiment, R^{b3} is a single bond.

In another embodiment, R^{b3} is an optionally substituted C₁₋₆ alkylene group, and is preferably a C₁₋₆ alkylene group.

In the above formulae, R^{a} is an alkyl, phenyl, -SR^{a1}, - OR^{a2}, -NR^{a3}₂, 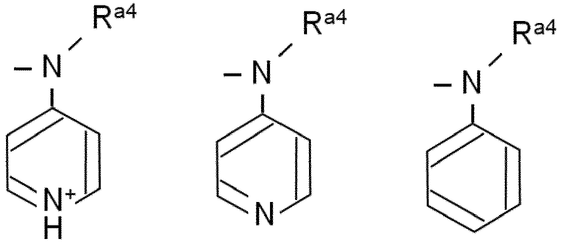 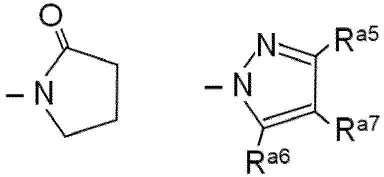 . R^{a} may be part of a so-called RAFT agent.

In the above formulae, R^{a1}, R^{a2}, R^{a3}, R^{a4}, R^{a5}, and R^{a6} are each independently an alkyl group or a phenyl group.

The above R^{a1} is preferably a C₁₋₂₀ alkyl group, more preferably a C₃₋₁₈ alkyl group, and still more preferably a C₄₋₁₂ alkyl group.

The above R^{a2} is preferably a phenyl group or a C₁₋₂₀ alkyl group. The C₁₋₂₀ alkyl group is preferably a C₁₋₁₀ alkyl group, more preferably a C₁₋₆ alkyl group, and still more preferably a C₁₋₃ alkyl group.

The above R^{a3} is preferably a C₁₋₂₀ alkyl group, more preferably a C₁₋₁₀ alkyl group, still more preferably a C₁₋₆ alkyl group, and even more preferably a C₁₋₃ alkyl group.

The above R^{a4} is preferably a C₁₋₆ alkyl group, more preferably a C₁₋₃ alkyl group, and still more preferably a methyl group.

The above R^{a5} is preferably a C₁₋₆ alkyl group, more preferably a C₁₋₃ alkyl group, and still more preferably a methyl group.

The above R^{a6} is preferably a C₁₋₆ alkyl group, more preferably a C₁₋₃ alkyl group, and still more preferably a methyl group.

The above R^{a7} is a hydrogen or halogen atom (such as fluorine, chlorine, bromine, or iodine, and preferably chlorine).

In one embodiment, R^{a} is -SR^{a1} or -OR^{a2}.

In one embodiment, the (A) fluoropolyether group-containing polymer may be a fluoropolyether group-containing polymer represented by the formula (1).

In one embodiment, the (A) fluoropolyether group-containing polymer may be a fluoropolyether group-containing polymer represented by the formula (2).

The number average molecular weight of the above fluoropolyether group-containing polymer may be, but is not limited to, 2 × 10² to 1 × 10⁵, preferably 1 × 10³ to 5 × 10⁴, and more preferably 3 × 10³ to 2 × 10⁴. When the number average molecular weight is within such a range, the solubility in a solvent and the contact angle of the surface-treating layer can be further increased. The number average molecular weight can be determined by gel permeation chromatography (GPC).

The polydispersity (weight average molecular weight (Mw) / number average molecular weight (Mn)) of the above fluoropolyether group-containing polymer may be preferably 3.0 or less, more preferably 2.5 or less, still more preferably 2.0 or less, and even more preferably 1.5 or less. By reducing the polydispersity, a more homogeneous surface-treating layer can be formed, and the durability of the surface-treating layer can be improved.

The above fluoropolyether group-containing polymer can be synthesized by utilizing, for example, so-called reversible addition-fragmentation chain transfer (RAFT) type radical polymerization.

At first, a RAFT agent having a perfluoropolyether group is prepared. For example, a compound (A) having a perfluoropolyether and a compound (B1) or (B2) having a RAFT skeleton (-SC(=S)-):

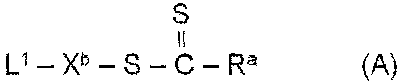

R^{F1}-X^{a}- L² (B1)

L²-X^{a}- R^{F2}-X^{a}- L² (B2)

[wherein R^{a}, R^{F1}, R^{F2}, X^{a}, and X^{b} have the same definition as described above; and
L¹ and L² are each a moiety to be removed.]
are allowed to react with each other to obtain a chain transfer agent (1a) or (2a) having a perfluoropolyether group: 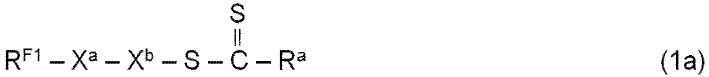 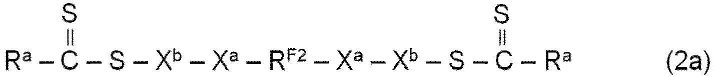 wherein R^{a}, R^{F1}, R^{F2}, X^{a}, and X^{b} have the same definition as described above.

The chain transfer agent (1a) or (2a) obtained as described above is allowed to react with a monomer having an unsaturated bond to obtain the compound represented by the above formula (1) or (2). Such a reaction is so-called RAFT polymerization, and as the reaction conditions, conditions generally used in RAFT polymerization can be used.

### [(B) Siloxane polymer]

The above siloxane polymer is a siloxane polymer represented by the following formula: 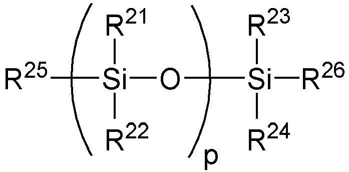 wherein
R²¹ is each independently at each occurrence a hydrogen atom, a C₁₋₆ alkyl group, or an aryl group;
R²² is each independently at each occurrence a hydrogen atom, a C₁₋₆ alkyl group, or an aryl group;
R²³ is a hydrogen atom, a C₁₋₆ alkyl group, or an aryl group;
R²⁴ is a hydrogen atom, a C₁₋₆ alkyl group, or an aryl group;
R²⁵ is a hydrogen atom or a monovalent organic group;
R²⁶ is a hydrogen atom or a monovalent organic group; and
p is any integer.

In the above formula, R²¹ and R²² are each independently at each occurrence a hydrogen atom, a C₁₋₆ alkyl group, or an aryl group.

In the above formula, R²³ and R²⁴ are each independently a hydrogen atom, a C₁₋₆ alkyl group, or an aryl group.

R²¹, R²², R²³, and R²⁴ may be the same group or may be different groups. In a preferred embodiment, R²¹, R²², R²³, and R²⁴ are the same group.

The above C₁₋₆ alkyl group may be linear or branched. The above C₁₋₆ alkyl group may also contain a cyclic structure. In one embodiment, the C₁₋₆ alkyl group is linear. In another embodiment, the C₁₋₆ alkyl group is branched. In another embodiment, the C₁₋₆ alkyl group is a C₃₋₆ cyclic alkyl group.

The above C₁₋₆ alkyl group is preferably a C₁₋₄ alkyl group, more preferably a C₁₋₃ alkyl group, still more preferably a methyl group or an ethyl group, and particularly preferably a methyl group.

The above aryl group may be monocyclic or polycyclic.

The above aryl group is preferably a C₅₋₂₀ aryl group, more preferably a C₆₋₁₆ aryl group, still more preferably a C₆₋₁₂ aryl group, and even more preferably a C₆₋₁₀ aryl group.

In one embodiment, R²¹, R²², R²³, and R²⁴ are each a hydrogen atom.

In another embodiment, R²¹, R²², R²³, and R²⁴ are each a C₁₋₆ alkyl group or an aryl group, and preferably a C₁₋₆ alkyl group.

The above R²⁵ and R²⁶ are each independently a hydrogen atom or a monovalent organic group.

The above monovalent organic group is preferably -R²⁷-R2 .

The above R²⁷ is understood to be part of a linker connecting the siloxane skeleton of the above siloxane polymer and R²¹, which is the end functional group. Accordingly, R²⁷ may be any divalent organic group as long as the above siloxane polymer can be stably present.

The above R²⁷ is a divalent organic group, an oxygen atom, or a single bond.

In one embodiment, examples of the above divalent organic group include a divalent organic group represented by

-(R⁵¹)_{q5}-(R⁵²)_{q6}-(R⁵³)_{q7}-

wherein
R⁵¹ and R⁵³ are each independently -(CH₂)ᵣ₁- or an o-, m-, or p-phenylene group, and preferably -(CH₂)ᵣ₁-;
r1 is an integer of 1 to 20, preferably an integer of 1 to 6, and more preferably an integer of 1 to 3;
R⁵² is each independently at each occurrence a group selected from the group consisting of -O-, -S-, an o-, m-, or p-phenylene group, -C(O)O-, -CONR⁵⁴-, -O-CONR⁵⁴-, -NR⁵⁴- and -(CH₂)ᵣ₂-;
R⁵⁴ is each independently at each occurrence a hydrogen atom, a phenyl group, a C₂₋₆ alkyl group (preferably a methyl group), or an oxyalkylene-containing group having 1 to 10 carbon atoms;
r2 is an integer of 1 to 20, preferably an integer of 1 to 6, and more preferably an integer of 1 to 3;
q5 is 0 or 1;
q6 is an integer of 0 to 10, preferably an integer of 0 to 5, and more preferably an integer of 0 to 3; and
q7 is 0 or 1,
provided that at least one of q5, q6, and q7 is 1.

The above R²⁷ is preferably a single bond, an oxygen bond, or a group represented by the formula:

-(R⁵¹)_{q5}-(R⁶¹)_{q6}-(R⁵³)_{q7}-

wherein
R⁵¹ and R⁵³ each independently represent -(CH₂)ᵣ₁- or an o-, m-, or p-phenylene group, and are preferably -(CH₂)ᵣ₁-;
r1 is an integer of 1 to 20, preferably an integer of 1 to 6, and more preferably an integer of 1 to 3;
R⁶¹ is each independently at each occurrence a group selected from the group consisting of -O-, -S-, -C(O)O-, - CONR⁵⁴-, -O-CONR⁵⁴-, and -NR⁵⁴-, and preferably -O-;
q5 is 0 or 1;
q6 is an integer of 0 to 10, preferably an integer of 0 to 5, and more preferably an integer of 0 to 3; and
q7 is 0 or 1,
provided that at least one of q5, q6, and q7 is 1.

The above R²⁸ is a hydrogen atom, -OH, -CO-CH=CH₂, -CO-C(CH₃)=CH₂, an epoxy group, an alicyclic epoxy group, an amino group, a carboxyl group, a vinyl group, an alkoxy group, or a thiol group.

In a preferred embodiment, the above R²⁸ is a hydrogen atom, -OH, -CO-CH=CH₂, or -CO-C(CH₃)=CH₂.

In one embodiment, R²⁵ and R²⁶ are each a C₁₋₆ alkyl group, and preferably a C₁₋₃ alkyl group.

In a preferred embodiment,
R²⁵ is a C₁₋₆ alkyl group;
R²⁶ is -R²⁷-R²⁸;
R²⁷ is a divalent organic group, an oxygen atom, or a single bond; and
R²⁸ is a hydrogen atom, -OH, -CO-CH=CH₂, -CO-C (CH₃)=CH₂, an epoxy group, an alicyclic epoxy group, an amino group, a carboxyl group, a vinyl group, an alkoxy group, or a thiol group.

In another preferred embodiment,
R²⁵ and R²⁶ are each -R²⁷-R²⁸;
R²⁷ is a divalent organic group, an oxygen atom, or a single bond; and
R²⁸ is a hydrogen atom, -OH, -CO-CH=CH₂, -CO-C (CH₃)=CH₂, an epoxy group, an alicyclic epoxy group, an amino group, a carboxyl group, a vinyl group, an alkoxy group, or a thiol group.

The above siloxane polymer has a number average molecular weight of more than 350 and less than 10,000, preferably 800 to 8,000, and more preferably 900 to 7,000. When the above siloxane polymer has a number average molecular weight in the above range, the surface lubricity and appearance of a surface-treating layer obtained by the composition of the present disclosure are improved.

The content of the above siloxane polymer is 0.1 to 300 parts by mass, preferably 1 to 300 parts by mass, more preferably 1 to 250 parts by mass, even more preferably 1 to 200 parts by mass, and particularly preferably 1 to 150 parts by mass, based on 100 parts by mass of the fluoropolyether group-containing polymer.

### [Other components]

The composition of the present disclosure may further comprise a (non-reactive) fluoropolyether compound, preferably a perfluoro(poly)ether compound, that can be interpreted as a fluorine-containing oil (hereinafter, collectively referred to as the "fluorine-containing oil"). The composition of the present disclosure may also comprise other components, such as a solvent, an active energy ray radical curing initiator, a thermal acid generator, and an active energy ray cationic curing initiator.

The above fluorine-containing oil is not limited, and examples thereof include a compound (perfluoro(poly)ether compound) represented by the following general formula (3):

Rf⁵-(OC₄F₈)_{a'}-(OC₃F₆)_{b'}-(OC₂F₄)_{c'}-(OCF₂)_{d'}-Rf⁶ ... (3)

wherein Rf⁵ represents an alkyl group having 1 to 16 carbon atoms and optionally substituted with one or more fluorine atoms (preferably a C₁₋₁₆ perfluoroalkyl group), Rf⁶ represents an alkyl group having 1 to 16 carbon atoms and optionally substituted with one or more fluorine atoms (preferably a C₁₋₁₆ perfluoroalkyl group), a fluorine atom, or a hydrogen atom, and Rf⁵ and Rf⁶ are more preferably, each independently, a C₁₋₃ perfluoroalkyl group.
a', b', c', and d' respectively represent the numbers of 4 repeating units of perfluoro(poly)ether constituting the main backbone of the polymer and are mutually independently an integer of 0 or more and 300 or less, and the sum of a', b', c', and d' is at least 1, preferably 1 to 300, and more preferably 20 to 300. The occurrence order of the respective repeating units enclosed in parentheses provided with the subscript a', b', c', or d' is not limited in the formula. Among these repeating units, -(OC₄F₈)- may be any of -(OCF₂CF₂CF₂CF₂)-, -(OCF(CF₃)CF₂CF₂)-, - (OCF₂CF(CF₃)CF₂) -, -(OCF₂CF₂CF(CF₃))-, -(OC(CF₃)₂CF₂)-, - (OCF₂C(CF₃)₂)-, -(OCF(CF₃)CF(CF₃))-, -(OCF(C₂F₅)CF₂)-, and (OCF₂CF(C₂F₅) and is preferably -(OCF₂CF₂CF₂CF₂)-. - (OC₃F₆)- may be any of -(OCF₂CF₂CF₂)-, -(OCF(CF₃)CF₂)-, and (OCF₂CF(CF₃)) -, and is preferably -(OCF₂CF₂CF₂)- . -(OC₂F₄)-may be any of -(OCF₂CF₂)- and (OCF(CF₃))-, and is preferably -(OCF₂CF₂)-.

Examples of the perfluoro(poly)ether compound represented by the above general formula (3) include a compound represented by any of the following general formulae (3a) and (3b) (which may be used singly or as a mixture of two or more):

Rf⁵-(OCF₂CF₂CF₂)_{b"}-Rf⁶ ... (3a)

Rf⁵-(OCF₂CF₂CF₂CF₂)_{a"}-(OCF₂CF₂CF₂)_{b"}-(OCF₂CF₂)_{c"}-(OCF₂)_{d"}-Rf⁶ ... (3b)

wherein Rf⁵ and Rf⁶ are as described above; in the formula (3a), b'' is an integer of 1 or more and 100 or less; and in the formula (3b), a'' and b'' are each independently an integer of 0 or more and 30 or less, and c'' and d'' are each independently an integer of 1 or more and 300 or less. The occurrence order of the respective repeating units enclosed in parentheses provided with the subscript a", b", c'', or d'' is not limited in the formula.

Also, from another viewpoint, the fluorine-containing oil may be a compound represented by the general formula Rf³-F (wherein Rf³ is a C₅₋₁₆ perfluoroalkyl group.) . Alternatively, the fluorine-containing oil may be a chlorotrifluoroethylene oligomer.

The above fluorine-containing oil may have an average molecular weight of 500 to 10,000. The molecular weight of the fluorine-containing oil can be measured using GPC.

The fluorine-containing oil may be contained in an amount of, for example, 0 to 50% by mass, preferably 0 to 30% by mass, and more preferably 0 to 5% by mass, based on the composition of the present disclosure. In one embodiment, the composition of the present disclosure is substantially free from the fluorine-containing oil. Being substantially free from the fluorine-containing oil means that the fluorine-containing oil is not contained at all, or an extremely small amount of the fluorine-containing oil may be contained.

In one embodiment, the average molecular weight of the fluorine-containing oil may be greater than the average molecular weight of the fluoropolyether group-containing silane compound. With such average molecular weights, better abrasion durability and surface lubricity can be obtained, in the case of forming the surface-treating layer by the vacuum deposition method.

In one embodiment, the average molecular weight of the fluorine-containing oil may be smaller than the average molecular weight of the fluoropolyether group-containing silane compound. With such average molecular weights, it is possible to form a cured product having high abrasion durability and high surface lubricity while suppressing reduction in the transparency of the surface-treating layer obtained from such a compound.

The fluorine-containing oil contributes to improving the surface lubricity of a layer formed of the composition of the present disclosure.

As the above solvent, a fluorine-containing organic solvent and a fluorine-free organic solvent can be used.

Examples of the above fluorine-containing organic solvent include perfluorohexane, perfluorooctane, perfluorodimethyl cyclohexane, perfluorodecalin, perfluoroalkyl ethanol, perfluorobenzene, perfluorotoluene, perfluoroalkyl amine (for example, Fluorinert (trade name)), perfluoroalkyl ether, perfluorobutyl tetrahydrofuran, polyfluoroaliphatic hydrocarbons (ASAHIKLIN AC6000 (trade name)), hydrochlorofluorocarbons (for example, ASAHIKLIN AK-225 (trade name)), hydrofluoroether (for example, Novec (trade name), HFE-7100 (trade name)), 1,1,2,2,3,3,4-heptafluorocyclopentane, fluorine-containing alcohols, perfluoroalkyl bromide, perfluoroalkyl iodide, perfluoropolyether (for example, Krytox (trade name), Demnum (trade name), Fomblin (trade name)), 1,3-bistrifluoromethylbenzene, 2-(perfluoroalkyl)ethyl methacrylate, 2-(perfluoroalkyl)ethyl acrylate, perfluoroalkyl ethylene, chlorofluorocarbon 134a, and hexafluoropropene oligomers.

Examples of the above fluorine-free organic solvent include acetone, methyl isobutyl ketone, cyclohexanone, propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, dipropylene glycol dimethyl ether pentane, hexane, heptane, octane, dichloromethane, chloroform, carbon tetrachloride, dichloroethane, carbon disulfide, benzene, toluene, xylene, nitrobenzene, diethyl ether, dimethoxyethane, diglyme, triglyme, ethyl acetate, butyl acetate, dimethylformamide, dimethyl sulfoxide, 2-butanone, acetonitrile, benzonitrile, butanol, 1-propanol, 2-propanol, ethanol, methanol, and diacetone alcohol.

One of the above solvents may be used singly, or two or more thereof may be used in combination.

The above solvent is contained in an amount of 5 to 100,000 parts by mass, and preferably 5 to 50,000 parts by mass, based on 100 parts by mass of the total of the above fluoropolyether group-containing polymer and siloxane polymer, as well as a fluorine-containing oil (C), which will be described below, if present.

As the above active energy ray radical curing initiator, for example, one is used that generates radicals for the first time upon irradiation with electromagnetic waves in a wavelength region of 350 nm or less, such as ultraviolet rays, electron beams, X-rays, γ-rays, or the like, functions as a catalyst that initiates curing (crosslinking reaction) of a curable site (for example, carbon-carbon double bond) of the above fluoropolyether group-containing polymer, and usually generates radicals with ultraviolet rays.

The above active energy ray radical curing initiator is appropriately selected depending on the type of curable site in the above fluoropolyether group-containing polymer, the type of active energy ray to be used (wavelength range or the like), irradiation intensity, or the like, and generally, the following can be exemplified as the initiator for curing the above fluoropolyether group-containing polymer having a radical-reactive curable site (carbon-carbon double bond) using the active energy ray in the ultraviolet region.

- Acetophenones
   acetophenone, chloroacetophenone, diethoxyacetophenone, hydroxyacetophenone, α-aminoacetophenone, hydroxypropiophenone, 2-methyl-1-[4-(methylthio)phenyl]-2-morpholinopropane-1-one, and the like.
- Benzoins
   benzoin, benzoin methyl ether, benzoin ethyl ether, benzoin isopropyl ether, benzoin isobutyl ether, benzyl dimethyl ketal, and the like.
- Benzophenones
   benzophenone, benzoylbenzoic acid, methyl benzoylbenzoate, 4-phenylbenzophenone, hydroxybenzophenone, hydroxy-propylbenzophenone, acrylated benzophenone, Michler's ketone, and the like.
- Thioxanthones
   thioxanthone, chlorothioxanthone, methylthioxanthone, diethylthioxanthone, dimethylthioxanthone, and the like.
- Others
   benzyl, α-acyloxime ester, acylphosphine oxide, glyoxyester, 3-ketocoumarin, 2-ethylanthraquinone, camphorquinone, anthraquinone, and the like.

One of these active energy ray curing initiators may be used singly, or two or more thereof may be used in combination.

The above active energy ray curing initiator is contained in an amount of 0.01 to 1,000 parts by mass, and preferably 0.1 to 500 parts by mass, based on 100 parts by mass of the total of the above fluoropolyether group-containing polymer and siloxane polymer, as well as the fluorine-containing oil, if present, although there is no limitation on the amount thereof.

By using the above thermal acid generator, decomposition reaction of the compound containing a cationic species is caused by heat, and curing (crosslinking reaction) of a curable site (for example, cyclic ether) of the fluoropolyether group-containing polymer having the curable site is initiated.

The above thermal acid generator is suitably, for example, a compound represented by the following general formula (a):

(R¹ₐR²_{b}R³_{c}R⁴_{d}Z)^{+m}(AXₙ)^{-m} (a)

(wherein Z represents at least one element selected from the group consisting of S, Se, Te, P, As, Sb, Bi, O, N, and halogen elements; R¹, R², R³, and R⁴ are the same or different and represent an organic group; a, b, c and d are each 0 or a positive number, and the total of a, b, c, and d is equal to the valence of Z; the cation (R¹ₐR²_{b}R³_{c}R⁴_{d}Z)^{+m} represents an onium salt; A represents a metal element or a metalloid element, which is the central atom of the halide complex, and is at least one selected from the group consisting of B, P, As, Al, Ca, In, Ti, Zn, Sc, V, Cr, Mn, and Co; X represents a halogen element; m is the net charge of the halide complex ion; and n is the number of halogen elements in the halide complex ion.

Specific examples of the anion (AXₙ)^{-m} of the above general formula (a) include tetrafluoroborate (BF₄⁻), hexafluorophosphate (PF₆⁻), hexafluoroantimonate (SbF₆⁻), hexafluoroarsenate (AsF₆⁻), and hexachloroantimonate (SbCl₆⁻). Furthermore, anions represented by the general formula AXn(OH)⁻ can also be used. Examples of other anions include perchlorate ion (ClO₄⁻), trifluoromethylsulfite ion (CF₃SO₃⁻), fluorosulfonate ion (FSO₃⁻), toluenesulfonate ion, and trinitrobenzenesulfonate ion.

Specific examples of commercial products of the above thermal acid generator include: diazonium salt products such as AMERICURE series (manufactured by American Can Company), ULTRASET series (manufactured by Adeka Corporation), and WPAG series (manufactured by Wako Pure Chemical Industries, Ltd.); iodonium salt products such as UVE series (manufactured by General Electric Company), FC series (manufactured by 3M), UV9310C (manufactured by GE Toshiba Silicones Ltd.), Photoinitiator 2074 (manufactured by Rhone-Poulenc), and WPI series (manufactured by Wako Pure Chemical Industries, Ltd.); and sulfonium salt products such as CYRACURE series (manufactured by Union Carbide Corporation), UVI series (manufactured by General Electric Company), FC series (manufactured by 3M), CD series (manufactured by Sartomer Company Inc.), Optomer SP series and Optmer CP series (manufactured by Adeka Corporation), San Aid SI series (manufactured by Sanshin Chemical Industry Co., Ltd.), CI series (manufactured by Nippon Soda Co., Ltd.), WPAG series (manufactured by Wako Pure Chemical Industries, Ltd.), and CPI series (manufactured by San-Apro Ltd.).

One of these thermal acid generators may be used singly, or two or more thereof may be used in combination.

The above thermal acid generator is contained in an amount of 0.01 to 1,000 parts by mass, and preferably 0.1 to 500 parts by mass, based on 100 parts by mass of the total of the fluoropolyether group-containing polymer and the siloxane polymer, as well as the fluorine-containing oil, if present, although there is no limitation on the amount thereof.

By using the above active energy ray cationic curing initiator, a compound containing a cationic species is excited by light to cause a photodecomposition reaction, thereby initiating curing (crosslinking reaction) of a curable site (for example, cyclic ether) of the fluoropolyether group-containing polymer.

Suitable examples of the above active energy ray cationic curing initiator include triphenylsulfonium hexafluoroantimonate, triphenylsulfonium phosphate, p-(phenylthio)phenyldiphenylsulfonium hexafluoroantimonate, p-(phenylthio)phenyldiphenylsulfonium hexafluorophosphate, 4-chlorophenyldiphenylsulfonium hexafluorophosphate, 4-chlorophenyldiphenylsulfonium hexafluoroantimonate, bis[4-(diphenylsulfonio)phenyl]sulfide bishexafluorophosphate, bis[4-(diphenylsulfonio)phenyl]sulfide bishexafluoroantimonate, (2,4-cyclopentadien-1-yl) [(1-methylethyl)benzene]-Fe-hexafluorophosphate, and diaryliodonium hexafluoroantimonate.

Specific examples of commercial products of the above active energy ray cationic curing initiator preferably include diazonium salt, iodonium salt, and sulfonium salt products such as UVI-6950, UVI-6970, UVI-6974, and UVI-6990 (manufactured by Union Carbide Corporation); Adeca Optomer SP-150, SP-151, SP-170, and SP-172 (manufactured by ADEKA CORPORATION); Irgacure 250 (manufactured by Chiba Japan); CI-2481, CI-2624, CI-2639, and CI-2064 (manufactured by Nippon Soda Co., Ltd.); CD-1010, CD-1011, and CD-1012 (manufactured by Sartomer Company Inc.); DTS-102, DTS-103, NAT-103, NDS-103, TPS-103, MDS-103, MPI-103, and BBI-103 (manufactured by Midori Kagaku Co., Ltd.); PCI-061T, PCI-062T, PCI-020T, and PCI-022T (manufactured by Nippon Kayaku Co., Ltd.); CPI-100P, CPT-101A, and CPI-200K (manufactured by San-Apro Ltd.); San-Aid SI-60L, San-Aid SI-80L, San-Aid SI-100L, San-Aid ST-110L, San-Aid SI-145, San-Aid SI-150, San-Aid SI-160, and San-Aid SI-180L (manufactured by Sanshin Chemical Industry Co., Ltd.); and WPAG series (manufactured by Wako Pure Chemical Industries, Ltd.).

One of these active energy ray cationic curing initiators may be used singly, or two or more thereof may be used in combination.

The above active energy ray radical curing initiator is contained in an amount of 0.01 to 1,000 parts by mass, and preferably 0.1 to 500 parts by mass, based on 100 parts by mass of the total of the fluoropolyether group-containing polymer and the siloxane polymer, as well as the fluorine-containing oil, if present, although there is no limitation on the amount thereof.

### [Surface-treating agent]

The composition of the present disclosure is useful as a surface-treating agent. Accordingly, the present disclosure provides a surface-treating agent comprising the composition of the present disclosure.

In a preferred embodiment, the composition of the present disclosure is a surface-treating agent.

### [Curable composition]

The present disclosure provides a curable composition comprising the composition and the surface-treating agent of the present disclosure described above, and/or a matrix-forming composition.

### [Matrix-forming composition]

The above matrix-forming composition means a composition containing a compound having at least one carbon-carbon double bond, for example, a compound that is a monofunctional and/or polyfunctional acrylate and methacrylate (hereinafter, acrylate and methacrylate are also collectively referred to as "(meth)acrylate"), a monofunctional and/or polyfunctional urethane (meth)acrylate, or a monofunctional and/or polyfunctional epoxy (meth)acrylate, although not limited thereto. Examples of such a matrix-forming composition include, but are not limited to, a composition generally used as a hard coating agent or an anti-reflective agent, for example, a hard coating agent containing a polyfunctional (meth)acrylate or an anti-reflective agent containing a fluorine-containing (meth)acrylate. Such a hard coating agent is commercially available, for example, as Beam set 502H, 504H, 505A-6, 550B, 575CB, 577, 1402 (trade name) from Arakawa Chemical Industries, Ltd.; as EBECRYL40 (trade name) from Daicel Cytec company LTD.; and as HR300 series (trade name) from Yokohama Rubber Co., Ltd. The above anti-reflective agent is commercially available, for example, as Optool AR-110 (trade name) from Daikin Industries, Ltd.

As the above matrix-forming composition, a composition containing a compound that is a monofunctional and/or polyfunctional epoxy is also preferred. For example, epoxy compounds such as bisphenol A diglycidyl ether, 2,2'-bis(4-glycidyloxycyclohexyl)propane, 3,4-epoxycyclohexylmethyl-3,4-epoxycyclohexanecarboxylate, vinylcyclohexene dioxide, 2-(3,4-epoxycyclohexyl)-5,5-spiro-(3,4-epoxycyclohexane)-1,3-dioxane, bis(3,4-epoxycyclohexyl) adipate, 1,2-cyclopropanedicarboxylic acid bisglycidyl ester, and triglycidyl isocyanurate can be used. Also usable are hydrogenated epoxy resins, alicyclic epoxy resins, epoxy resins containing isocyanurate rings, bisphenol A type epoxy resins, bisphenol F type epoxy resins, phenol novolac type epoxy resins, cresol novolac type epoxy resins, naphthalene type epoxy resins, biphenyl type epoxy resins, phenol aralkyl type epoxy resins, biphenyl aralkyl type epoxy resins, hydrogenated epoxy resins obtained by hydrogenating aromatic rings of the various epoxy resins, and dicyclopentadiene type epoxy resins, although some overlap with the aforementioned.

In one embodiment, the above curable composition comprises 0.01 to 20% by mass, preferably 0.01 to 10% by mass, and more preferably 0.1 to 10% by mass of the fluoropolyether group-containing polymer and the siloxane polymer, based on the solid of the matrix-forming composition.

The curable composition of the present disclosure may further comprise antioxidants, thickening agents, leveling agents, antifoaming agents, antistatic agents, antifogging agents, ultraviolet absorbers, pigments, dyes, inorganic fine particles such as silica, fillers such as aluminum paste, talc, glass frit, and metal powder, and polymerization inhibitors such as butylated hydroxytoluene (BHT) and phenothiazine (PTZ), and the like.

### [Article]

Next, an article of the present disclosure will be described.

The present disclosure provides an article comprising a substrate and a layer (surface-treating layer) on a surface of the substrate, wherein the layer is formed of the composition, surface-treating agent, or curable composition of the present disclosure. This article can be produced as follows, for example.

At first, a substrate is provided. The substrate usable in the present disclosure may be composed of any suitable material such as a glass, a resin (this may be a natural or synthetic resin such as a common plastic material, preferably a polycarbonate resin, a poly(meth)acrylate resin, a polyethylene terephthalate resin, a triacetyl cellulose resin, a polyimide resin, a modified (transparent) polyimide resin, a polycycloolefin resin, and a polyethylene naphthalate resin, and may be in the form of a plate, a film, or others), a metal (this may be a simple substance of a metal such as aluminum, copper, silver, or iron, or a complex such as an alloy or the like), a ceramic, a semiconductor (silicon, germanium, or the like), a fiber (a fabric, a nonwoven fabric, or the like), a fur, a leather, a wood, a pottery, a stone, an architectural member, or the like.

For example, when the article to be produced is an optical member, the material constituting the surface of the substrate may be a material for an optical member, such as a glass or a transparent plastic. The substrate, according to its specific specifications or the like, may also have an insulating layer, an adhesive layer, a protecting layer, a decorated frame layer (I-CON), an atomizing film layer, a hard coating layer, a polarizing film, a phase difference film, an organic EL display module, a liquid crystal display module, or the like.

The shape of the substrate is not limited. The surface region of the substrate on which a surface-treating layer is to be formed may be at least part of the substrate surface, and may be suitably determined according to the application, specific specifications, and the like of an article to be produced.

Then, a film of the above composition, surface-treating agent, or curable composition of the present disclosure is formed on the surface of such a substrate, and this film is post-treated as necessary, thereby forming a surface-treating layer from the composition, surface-treating agent, or curable composition of the present disclosure.

The film of the composition, surface-treating agent, or curable composition of the present disclosure can be formed by applying the above composition, surface-treating agent, or curable composition to the surface of the substrate so as to coat the surface. The coating method is not limited. For example, a wet coating method can be used.

Examples of the wet coating method include dip coating, spin coating, flow coating, spray coating, roll coating, gravure coating, micro-gravure coating, bar coating, die coating, screen printing, and similar methods.

When using the wet coating method, the composition, surface-treating agent, or curable composition of the present disclosure can be applied to the substrate surface after being diluted with a solvent. As such a solvent, the fluorine-containing organic solvent and fluorine-free organic solvent described above can be used. From the viewpoint of the stability of the composition, surface-treating agent, or curable composition of the present disclosure and the volatility of the solvent, the following solvents are preferably used: perfluoroaliphatic hydrocarbons having 5 to 12 carbon atoms (for example, perfluorohexane, perfluoromethylcyclohexane, and perfluoro-1,3-dimethylcyclohexane); polyfluoroaromatic hydrocarbons (for example, bis(trifluoromethyl)benzene); polyfluoroaliphatic hydrocarbons; cellosolve solvents such as hydrofluoroethers (HFEs) (for example, alkyl perfluoroalkyl ethers such as perfluoropropyl methyl ether (C₃F₇OCH₃), perfluorobutyl methyl ether (C₄F₉OCH₃), perfluorobutyl ethyl ether (C₄F₉OC₂H₅), perfluorohexyl methyl ether (C₂F₅CF(OCH₃)C₃F₇) (the perfluoroalkyl group and the alkyl group may be linear or branched)), hydrochlorofluorocarbons (for example, ASAHIKLIN AK-225 (trade name)), methyl cellosolve, ethyl cellosolve, methyl cellosolve acetate, and ethyl cellosolve acetate; ester solvents such as diethyl oxalate, ethyl pyruvate, ethyl-2-hydroxybutyrate, ethyl acetoacetate, ethyl acetate, butyl acetate, amyl acetate, ethyl butyrate, butyl butyrate, methyl lactate, ethyl lactate, methyl 3-methoxypropionate, ethyl 3-methoxypropionate, methyl 2-hydroxyisobutyrate, and ethyl 2-hydroxyisobutyrate; propylene glycol solvents such as propylene glycol monomethyl ether, propylene glycol monoethyl ether, propylene glycol monobutyl ether, propylene glycol monomethyl ether acetate, propylene glycol monoethyl ether acetate, propylene glycol monobutyl ether acetate, and dipropylene glycol dimethyl ether; ketone solvents such as acetone, methyl ethyl ketone, methyl isobutyl ketone, 2-hexanone, cyclohexanone, methyl amino ketone, and 2-heptanone; alcohol solvents such as methanol, ethanol, propanol, isopropanol, butanol, and diacetone alcohol; and aromatic hydrocarbons such as toluene and xylene. One of these solvents may be used singly, or two or more thereof may be used as a mixture. Among them, hydrofluoroethers, glycol solvents, ester solvents, ketone solvents, and alcohol solvents are preferred, and perfluorobutyl methyl ether (C₄F₉OCH₃) and/or perfluorobutyl ethyl ether (C₄F₉OC₂H₅), propylene glycol monomethyl ether, ethyl acetate, butyl acetate, propylene glycol monomethyl ether acetate, methyl ethyl ketone, methyl isobutyl ketone, isopropanol, butanol, and diacetone alcohol are particularly preferred.

The film is then post-treated. This post-treatment is not limited, but is performed, for example, by irradiating with active energy rays, for example, electromagnetic waves in a wavelength region of 350 nm or less, such as ultraviolet rays, electron beams, X-rays, γ-rays, and the like. Alternatively, it is performed by heating for a predetermined time. By performing such post-treatment, curing of the curable site of the fluoropolyether group-containing polymer and, if present, the curable site of the matrix-forming composition is initiated, and bonds are formed between these compounds and between these compounds and the substrate.

In the above-described manner, a surface-treating layer derived from the composition, surface-treating agent, or curable composition of the present disclosure is formed on the substrate surface, and the article of the present disclosure is produced. The surface-treating layer thus obtained has both high surface lubricity (or lubricity, such as wiping property for fouling including fingerprints and the like and excellent tactile sensations to the fingers) and high friction durability. Furthermore, this surface-treating layer may have not only high friction durability and surface lubricity, but also have, depending on the compositional features of the composition, surface-treating agent, or curable composition to be used, water-repellency, oil-repellency, antifouling property (for example, preventing fouling including fingerprints and the like from adhering), and the like, and may be suitably used as a functional thin film.

The dynamic friction coefficient of the film formed from the surface-treating composition of the present invention is preferably 0.85 or less, more preferably 0.80 or less, and still more preferably 0.77 or less. By keeping the dynamic friction coefficient low, the coating film can be made to have better tactile sensations.

The above dynamic friction coefficient can be measured using a friction measuring machine ("Tribomaster TL201Ts", manufactured by Trinity-Lab Inc.) and the like with a tactile contactor as the friction block, a load of 20 gf, and a scanning speed of 10 mm/sec.

The range of static contact angle of water of the film formed from the surface-treating composition of the present invention is preferably 111 degrees or more, more preferably 112 degrees or more, and still more preferably 113 degrees or more. By increasing the contact angle, the coating film can be made to have more excellent antifouling property.

The above contact angle can be measured at a drop volume of 2 µL using a contact angle meter (DropMaster manufactured by Kyowa Interface Science Co., Ltd.).

The present disclosure further relates to an optical material having the above surface-treating layer in the outermost layer.

The optical material preferably includes a wide variety of optical materials in addition to optical materials relating to displays and the like as exemplified below: for example, displays such as cathode ray tubes (CRTs; for example, TV, PC monitors), liquid crystal displays, plasma displays, organic EL displays, inorganic thin-film EL dot matrix displays, rear projection displays, vacuum fluorescent displays (VFDs), and field emission displays (FEDs); protective plates for such displays; and those obtained by performing an antireflection film treatment on films or their surfaces.

In one embodiment, the article having a surface-treating layer obtained according to the present disclosure may be, but is not limited to, an optical member. Examples of the optical member include lenses of glasses or the like; front surface protective plates, anti-scattering films, antireflection plates, polarizing plates, and anti-glare plates for displays such as PDPs and LCDs; touch panel sheets for devices such as mobile phones and personal digital assistants; disc surfaces of optical discs such as Blu-ray(R) discs, DVD discs, CD-Rs, and MOs; and optical fibers.

In one embodiment, examples of the article having a surface-treating layer obtained according to the present disclosure include a light detection and ranging (LiDAR) cover member, a sensor member, an instrument panel cover member, an automobile interior member, and the like, and in particular, these members for automobiles.

The thickness of the surface-treating layer is not limited. The thickness of the surface-treating layer in the case of an optical member is in the range of 0.1 to 30 um, preferably 0.5 to 20 um, from the viewpoint of optical performance, surface lubricity, friction durability, and antifouling property.

The article obtained by using the composition, surface-treating agent, or curable composition of the present disclosure has been described in detail above. The application of the composition, surface-treating agent, or curable composition of the present disclosure, the method for using the same, the method for producing an article, and the like are not limited to those exemplified above.

### Examples

Hereinafter, the present disclosure will be described by way of Examples, but the present disclosure is not intended to be limited to the following Examples. In the Examples, all chemical formulas shown below indicate average compositional features, and the occurrence order of repeating units (such as (OCF₂CF₂CF₂), (OCF₂CF₂), and (OCF₂)) constituting perfluoropolyether is not limited.

1. Synthesis of perfluoropolyether-containing chain transfer agent
   Synthesis Example 1
   Synthesis of chain transfer agent (A-1)

To a flask were added 0.505 g of 2-[(dodecylsulfanylthiocarbonyl)sulfanyl] propanoic acid (manufactured by FUJIFILM Wako Pure Chemical Industries, Ltd.), 0.019 g of 4-dimethylaminopyridine (DMAP) (manufactured by Tokyo Chemical Industry Co., Ltd.), 0.293 g of 1-ethyl-3-(3-dimethylaminopropyl) carbodiimide hydrochloride (EDCI) (manufactured by Tokyo Chemical Industry Co., Ltd.), and 5.0 g of an alcohol containing perfluoropolyether represented by CF₃CF₂CF₂(OCF₂CF₂CF₂)ₙOCF₂CF₂CH₂OH (average value of n ≈ 25) (manufactured by Daikin Industries, Ltd.), 13 mL of ASAHIKLIN AK-225 (manufactured by AGC Inc.) was added, and the mixture was stirred at room temperature to conduct the reaction. After stirring overnight, the reaction solution was washed with saturated aqueous sodium bicarbonate and brine. The organic layer was separated, concentrated, and dropped into methanol to give 4.56 g of a yellow oily target product (A-1) .

### 2. Synthesis of PFPE block polymers having an epoxy group

### Synthesis Example 2

### (1) Synthesis of PFPE block polymer (P-1) having an epoxy group

Into a reaction vessel were added 1.0 g of the chain transfer agent (A-1), 0.23 g of 4-hydroxybutyl acrylate glycidyl ether (4HBAGE) (manufactured by Mitsubishi Chemical Corporation), and 12 mg of N,N'-azobis(isobutyronitrile) (AIBN) (manufactured by FUJIFILM Wako Pure Chemical Industries, Ltd.), and the mixture was dissolved in 2.9 mL of 1,3-bis(trifluoromethyl)benzene (manufactured by Tokyo Chemical Industry Co., Ltd.). The mixture was heated at 75°C for 17 hours, and the reaction solution was added dropwise to hexane to precipitate and recover a block polymer (P-1). From NMR measurement, the polymerization degree of 4HBAGE was calculated to be 5.

### Synthesis Example 3

### (2) Synthesis of PFPE block polymer (P-2) having an epoxy group

In the same manner as in Synthesis Example 2, a block polymer (P-2) having a polymerization degree of 4HBAGE of 10 was synthesized by changing the charging amount of 4HBAGE to 0.46 g.

### 3. Synthesis of PFPE block polymers having a (meth)acrylic group

### Synthesis Example 4

### (1) Synthesis of PFPE block polymer (P-3) having a hydroxyl group

Into a reaction vessel were added 1.3 g of (A-1), 0.18 g of 2-hydroxyethyl acrylate (HEA) (manufactured by Tokyo Chemical Industry Co., Ltd.), and 15.5 mg of AIBN, and the mixture was dissolved in 2.1 mL of 1,3-bis (trifluoromethyl)benzene. Polymerization was carried out by heating at 70°C for 22.5 hours to obtain a solution of a block polymer (P-3) . From NMR measurement, the polymerization degree of HEA was calculated to be 5.

### Synthesis Example 5

### (2) Synthesis of PFPE block polymer (P-4) having an acrylic group

1.1 equivalents of Karenz AOI (manufactured by Showa Denko K.K.) and 0.01 equivalents of dibutyltin dilaurate (DBTDL) (manufactured by Tokyo Chemical Industry Co., Ltd.) with respect to the HEA unit in the polymer (P-3) were added to the reaction solution of (1), and the mixture was stirred at 40°C for 2 hours. After it was confirmed by NMR measurement that 100% of the hydroxyl groups had reacted, the reaction solution was added dropwise to methanol to precipitate and recover a block polymer (P-4) having an acrylic group.

### Synthesis Example 6

### (3) Synthesis of PFPE block polymer (P-5) having a methacrylic group

In the same manner as in (2) of Synthesis Example 5, a block polymer (P-5) having a methacrylic group was synthesized, except that Karenz AOI was changed to Karenz MOI (manufactured by Showa Denko K.K.).

### Comparative Synthesis Example 1

### 4. Synthesis of PFPE compound (P-6) having an acrylic group

In a 1 L four-neck flask equipped with a dropping funnel, a condenser, a thermometer, and a stirrer, Sumidur(R) N3300 (manufactured by Sumika Bayer Urethane Co., Ltd., NCO group content: 21.8%, 36.6 g) was dissolved in ASAHIKLIN AK-225 (219.4 g), dibutyltin dilaurate (manufactured by FUJIFILM Wako Pure Chemical Industries, Ltd., 0.30 g) was added, a solution in which an alcohol containing perfluoropolyether represented by the average compositional features: CF₃CF₂CF₂O(CF₂CF₂CF₂O)₁₄CF₂CF₂CH₂OH (60.0 g) was dissolved in ASAHIKLIN AK-225 (60.0 g) was added dropwise while stirring at 40°C under nitrogen gas stream, and the mixture was stirred. HEA (19.6 g) was added dropwise and the mixture was stirred. It was confirmed by IR that absorption of NCO had been completely eliminated. 0.05 g of dibutylhydroxytoluene was added and the solvent was completely removed, and a PFPE compound (P-6) having an acrylic group was synthesized.

### Synthesis Example 7

### 5. Synthesis of PFPE block polymer (P-7) having an epoxy group

Into a reaction vessel were added 1.0 g of the chain transfer agent (A-1), 0.20 g of 4-hydroxybutyl acrylate glycidyl ether (4HBAGE) (manufactured by Mitsubishi Chemical Corporation), 0.10 g of n-butyl acrylate (manufactured by Tokyo Chemical Industry Co., Ltd.), and 12 mg of N,N'-azobis(isobutyronitrile) (AIBN) (manufactured by FUJIFILM Wako Pure Chemical Industries, Ltd.), and the mixture was dissolved in 3.1 mL of 1,3-bis(trifluoromethyl)benzene (manufactured by Tokyo Chemical Industry Co., Ltd.). The mixture was heated at 75°C for 20 hours, and the reaction solution was added dropwise to hexane to precipitate and recover a block polymer (P-7). It was confirmed by NMR measurement that four 4HBAGE units and three n-butyl acrylate units had been introduced into one molecule of the block polymer.

### 5. Coating liquid preparation and coating film preparation

### (1) Epoxy coatings

CELLOXIDE 2021P (manufactured by Daicel Corporation) was dissolved in MIBK as a matrix-forming epoxy compound, and the PFPE block polymers (P-1), (P-2), and (P-7) synthesized in Synthesis Examples 2 and 3 were added to the solution so that the concentration of the PFPE block polymers based on the solid of the epoxy compound was 1% in terms of the solid concentration respectively. Furthermore, the silicone compounds (S-1) to (S-9) were added in the combinations and in the amounts added (based on the matrix-forming compound) shown in Table 1 below in terms of the solid concentration based on the solid of the epoxy compound respectively, thereby preparing epoxy compound solutions of 50% by mass (Examples 1 to 9, 18 to 21, and Comparative Examples 4 to 7). In addition, a solution in which only the silicone compound (S-2) was added without adding any PFPE block polymer (Comparative Example 1), and solutions in which only the PFPE block polymer (P-1) or (P-2) was added without adding any silicone compound (Comparative Examples 2 and 3) were also prepared. Furthermore, a thermal acid generator, San-Aid SI-60L (manufactured by Sanshin Chemical Industry Co., Ltd.) was added in an amount of 3% by mass based on the solid of the epoxy compound to obtain coating agents. A PET substrate was coated with the coating agents using a bar coater and heated under conditions of 90°C for 2 hours to obtain cured films.

### (2) Acrylic coatings

BEAMSET 575CB (manufactured by Arakawa Chemical Industries, Ltd.) was dissolved in MIBK as a composition comprising a matrix-forming acrylic compound, and the PFPE block polymers (P-4) and (P-5) synthesized in Synthesis Examples 5 and 6 were added to the solution so that the concentration of the PFPE copolymer based on the resin solid of BEAMSET 575CB was 1% in terms of the solid concentration respectively. Furthermore, the silicone compounds (S-1), (S-4), and (S-6) were added in the combinations and in the amounts added (based on the matrix-forming compound) shown in Table 2 below in terms of the solid concentration based on the resin solid of BEAMSET 575CB respectively, thereby obtaining coating compositions of 50% by mass (Examples 10 to 17, and Comparative Examples 10, 11, 13, and 14) . In addition, a coating agent in which only the silicone compound (S-4) was added without adding any PFPE block polymer (Comparative Example 8), coating agents in which only the PFPE block polymer (P-4) or (P-5) was added without adding any silicone compound (Comparative Examples 9 and 12), and coating agents in which the PFPE compound (P-6) having an acrylic group synthesized in Comparative Synthesis Example 1 was added in place of the PFPE block polymer (Comparative Examples 15 and 16) were also prepared. A PET substrate was coated with the coating compositions using a bar coater, dried under conditions of 70°C for 10 minutes, and irradiated with ultraviolet rays to obtain cured films. A belt conveyor type ultraviolet irradiation device was used for the ultraviolet irradiation, and the dose was set to 600 mJ/cm².

### Silicone compounds

S-1: FM-0411 (manufactured by JNC Corporation, single-end OH polydimethylsiloxane, number average molecular weight 1,000)
S-2: FM-0421 (manufactured by JNC Corporation, single-end OH polydimethylsiloxane, number average molecular weight 5,000)
S-3: FM-0425 (manufactured by JNC Corporation, single-end OH polydimethylsiloxane, number average molecular weight 10,000)
S-4: KF-2012 (manufactured by Shin-Etsu Chemical Co., Ltd., single-end methacrylate polydimethylsiloxane, number average molecular weight 4,600)
S-5: KF-96-2cs (manufactured by Shin-Etsu Chemical Co., Ltd., non-modified end polydimethylsiloxane, number average molecular weight 350)
S-6: KF-96-100cs (manufactured by Shin-Etsu Chemical Co., Ltd., non-modified end polydimethylsiloxane, number average molecular weight 6,000)
S-7: X-22-173DX (manufactured by Shin-Etsu Chemical Co., Ltd., single-end epoxy polydimethylsiloxane, number average molecular weight 4,600)
S-8: X-22-163B (manufactured by Shin-Etsu Chemical Co., Ltd., both-end epoxy polydimethylsiloxane, number average molecular weight 3,600)
S-9: DMS-A15 (manufactured by Gelest, Inc., both-end amine polydimethylsiloxane, number average molecular weight 3, 000)

**[Table 1]**

| | PFPE polymer Synthesis Example | PFPE polymer | Silicone polymer | Silicone molecular weight | Silicone amount added (wt%) |
|---|---|---|---|---|---|
| Example 1 | Synthesis Example 2 | P-1 | S-2 | 5000 | 0.1 |
| Example 2 | Synthesis Example 2 | P-1 | S-2 | 5000 | 0.02 |
| Example 3 | Synthesis Example 2 | P-1 | S-2 | 5000 | 1.5 |
| Example 4 | Synthesis Example 2 | P-1 | S-1 | 1000 | 0.1 |
| Example 5 | Synthesis Example 2 | P-1 | S-4 | 4600 | 0.1 |
| Example 6 | Synthesis Example 2 | P-1 | S-4 | 4600 | 0.02 |
| Example 7 | Synthesis Example 2 | P-1 | S-6 | 6000 | 0.1 |
| Example 8 | Synthesis Example 2 | P-1 | S-6 | 6000 | 0.02 |
| Example 9 | Synthesis Example 3 | P-2 | S-2 | 5000 | 0.1 |
| Example 18 | Synthesis Example 7 | P-7 | S-2 | 5000 | 0.1 |
| Example 19 | Synthesis Example 1 | P-1 | S-7 | 4600 | 0.1 |
| Example 20 | Synthesis Example 1 | P-1 | S-8 | 3600 | 0.1 |
| Example 21 | Synthesis Example 1 | P-1 | S-9 | 3000 | 0.1 |
| Comparative Example 1 | - | - | S-2 | 5000 | 0.1 |
| Comparative Example 2 | Synthesis Example 2 | P-1 | - | - | - |
| Comparative Example 3 | Synthesis Example 3 | P-2 | - | - | - |
| Comparative Example 4 | Synthesis Example 2 | P-1 | S-2 | 5000 | 0.001 |
| Comparative Example 5 | Synthesis Example 2 | P-1 | S-2 | 5000 | 5 |
| Comparative Example 6 | Synthesis Example 2 | P-1 | S-5 | 350 | 0.1 |
| Comparative Example 7 | Synthesis Example 2 | P-1 | S-3 | 10000 | 0.1 |

**[Table 2]**

| | PFPE polymer Synthesis Example | PFPE polymer | Silicone polymer | Silicone molecular weight | Silicone amount added (wt%) |
|---|---|---|---|---|---|
| Example 10 | Synthesis Example 5 | P-4 | S-2 | 5000 | 0.1 |
| Example 11 | Synthesis Example 5 | P-4 | S-1 | 1000 | 0.1 |
| Example 12 | Synthesis Example 5 | P-4 | S-4 | 4600 | 0.1 |
| Example 13 | Synthesis Example 5 | P-4 | S-6 | 6000 | 0.1 |
| Example 14 | Synthesis Example 6 | P-5 | S-2 | 5000 | 0.1 |
| Example 15 | Synthesis Example 6 | P-5 | S-1 | 1000 | 0.1 |
| Example 16 | Synthesis Example 6 | P-5 | S-4 | 4600 | 0.1 |
| Example 17 | Synthesis Example 6 | P-5 | S-6 | 6000 | 0.1 |
| Comparative Example 8 | - | - | S-4 | 4600 | 0.1 |
| Comparative Example 9 | Synthesis Example 5 | P-4 | - | - | - |
| Comparative Example 10 | Synthesis Example 5 | P-4 | S-4 | 4600 | 0.001 |
| Comparative Example 11 | Synthesis Example 5 | P-4 | S-4 | 4600 | 5 |
| Comparative Example 12 | Synthesis Example 6 | P-5 | - | - | - |
| Comparative Example 13 | Synthesis Example 6 | P-5 | S-4 | 4600 | 0.001 |
| Comparative Example 14 | Synthesis Example 6 | P-5 | S-4 | 4600 | 5 |
| Comparative Example 15 | Comparative Synthesis Example 1 | P-6 | - | - | - |
| Comparative Example 16 | Comparative Synthesis Example 1 | P-6 | S-4 | 4600 | 0.1 |

### <Evaluation>

For the above Examples and Comparative Examples, miscibility, coating film appearance, contact angle, and surface lubricity were evaluated as follows. The results are shown in Table 3 (epoxy coatings) and Table 4 (acrylic coatings) below.

### 6. Evaluation of miscibility

For the coating solutions prepared in 5 above, the solution state was visually confirmed. The evaluation criteria were as follows.
G: Transparent and uniform dissolution was observed.
NG: Turbidity or separation of oil droplets was observed.

### 7. Coating film appearance

The cured films prepared in 5 above were visually observed. The evaluation criteria were as follows.
G: Even and smooth.
NG: Unevenness and cissing were observed.

### 8. Evaluation of contact angle

For the cured films prepared in 5 above, the static contact angle of water was measured using 2 µL of liquid using a contact angle meter ("DropMaster" manufactured by Kyowa Interface Science Co., Ltd.). The measurement was not performed for those with NG coating film appearance.

### 9. Evaluation of surface lubricity

For the cured films prepared in 5 above, the static friction coefficient and dynamic friction coefficient were measured using a friction measuring machine ("Tribomaster TL201Ts", manufactured by Trinity-Lab Inc.) with a tactile contactor as the friction block, a load of 20 gf, and a scanning speed of 10 mm/sec. The measurement was not performed for those with NG coating film appearance.

**[Table 3]**

| | Miscibility | Appearance | Contact angle (°) | Dynamic friction coefficient |
|---|---|---|---|---|
| Example 1 | G | G | 115 | 0.22 |
| Example 2 | G | G | 115 | 0.60 |
| Example 3 | G | G | 115 | 0.21 |
| Example 4 | G | G | 114 | 0.76 |
| Example 5 | G | G | 115 | 0.30 |
| Example 6 | G | G | 115 | 0.50 |
| Example 7 | G | G | 115 | 0.35 |
| Example 8 | G | G | 114 | 0.63 |
| Example 9 | G | G | 113 | 0.32 |
| Example 18 | G | G | 114 | 0.30 |
| Example 19 | G | G | 115 | 0.28 |
| Example 20 | G | G | 115 | 0.38 |
| Example 21 | G | G | 114 | 0.45 |
| Comparative Example 1 | G | G | 106 | 0.20 |
| Comparative Example 2 | G | G | 111 | 0.90 |
| Comparative Example 3 | G | G | 100 | 1.34 |
| Comparative Example 4 | G | G | 110 | 0.90 |
| Comparative Example 5 | NG | NG | - | - |
| Comparative Example 6 | G | G | 110 | 0.91 |
| Comparative Example 7 | NG | NG | - | - |

**[Table 4]**

| | Miscibility | Appearance | Contact angle (°) | Dynamic friction coefficient |
|---|---|---|---|---|
| Example 10 | G | G | 114 | 0.37 |
| Example 11 | G | G | 114 | 0.48 |
| Example 12 | G | G | 114 | 0.33 |
| Example 13 | G | G | 115 | 0.37 |
| Example 14 | G | G | 115 | 0.35 |
| Example 15 | G | G | 114 | 0.46 |
| Example 16 | G | G | 115 | 0.32 |
| Example 17 | G | G | 114 | 0.33 |
| Comparative Example 8 | G | G | 103 | 0.22 |
| Comparative Example 9 | G | G | 110 | 0.58 |
| Comparative Example 10 | G | G | 110 | 0.63 |
| Comparative Example 11 | NG | NG | - | - |
| Comparative Example 12 | G | G | 110 | 0.64 |
| Comparative Example 13 | G | G | 110 | 0.64 |
| Comparative Example 14 | NG | NG | - | - |
| Comparative Example 15 | NG | NG | - | - |
| Comparative Example 16 | NG | NG | | |

As described above, the compositions comprising fluoropolyether group-containing polymers (P-1 to P-5 and P-7) and siloxane polymers (S-1, S-2, S-4, and S-6 to S-9), which fall within the range of the present invention, were confirmed to have high miscibility, good coating film appearance, and both a large contact angle to water of 113 degrees or more and high lubricity.

### Industrial Applicability

The surface-treating agent of the present disclosure can be suitably utilized to form a surface-treating layer on the surface of a variety of substrates, in particular optical members for which transparency is required.

## Claims

1. A composition comprising a (A) fluoropolyether group-containing polymer and a (B) siloxane polymer, wherein
the fluoropolyether group-containing polymer is a copolymer represented by the following formula (1) or (2): 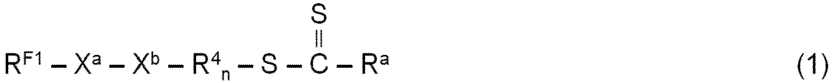 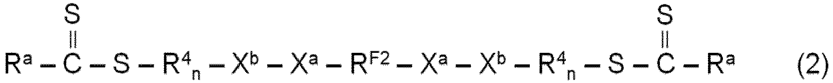 wherein
R^{F1} is Rf¹-R^{F}-O_{q}-;
R^{F2} is -Rf²ₚ-R^{F}-O_{q}-;
Rf¹ is a C₁₋₁₆ alkyl group optionally substituted with one or more fluorine atoms;
Rf² is a C₁₋₆ alkylene group optionally substituted with one or more fluorine atoms;
R^{F} is each independently a divalent fluoropolyether group;
p is 0 or 1;
q is each independently 0 or 1;
R⁴ is each independently at each occurrence R^{4a} or R^{4b};
R^{4a} is each independently at each occurrence a divalent organic group having a crosslinkable group;
R^{4b} is each independently at each occurrence a divalent organic group not having a crosslinkable group;
the crosslinkable group is a group containing a carbon-carbon double bond, a carbon-carbon triple bond, a cyclic ether group, a hydroxyl group, a thiol group, an amino group, an azide group, a nitrogen-containing heterocyclic group, an isocyanate group, a halogen atom, a phosphoric acid- containing group, or a silane coupling group; or a precursor group thereof;
n is an integer of 1 to 100;
X^{a} is each independently a divalent organic group;
X^{b} is each independently a divalent organic group;
R^{a} is each independently an alkyl, phenyl, -SR^{a1}, -OR^{a2}, -NR^{a3}₂, 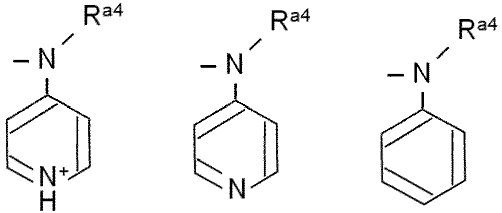 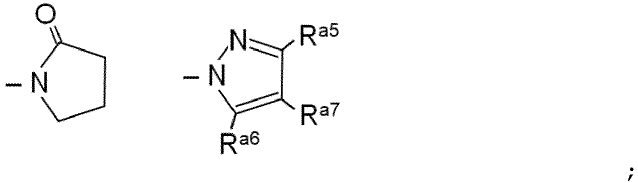
R^{a1}, R^{a2}, R^{a3}, R^{a4}, R^{a5}, and R^{a6} are each independently an alkyl group or a phenyl group; and
R^{a7} is a hydrogen or halogen atom,
and
the siloxane polymer has a number average molecular weight of more than 350 and less than 10,000.

2. The composition according to claim 1, wherein
R^{F} is each independently a group represented by the formula:
-(OC₆F₁₂)ₐ-(OC₅F₁₀)_{b}-(OC₄F₈)_{c}-(OC₃R^{Fa}₆)_{d}-(OC₂F₄)ₑ-(OCF₂)_{f}-
wherein R^{Fa} is each independently at each occurrence a hydrogen atom, a fluorine atom, or a chlorine atom; and
a, b, c, d, e, and f are each independently an integer of 0 to 200, the sum of a, b, c, d, e, and f is 1 or more, and the occurrence order of the respective repeating units enclosed in parentheses provided with a, b, c, d, e, or f is not limited in the formula.

3. The composition according to claim 2, wherein R^{Fa} is a fluorine atom.

4. The composition according to any one of claims 1 to 3, wherein
R^{F} is each independently a group represented by the following formula (f1), (f2), (f3), (f4), or (f5) :
-(OC₃F₆)_{d}-(OC₂F₄)ₑ- (f1)
wherein d is an integer of 1 to 200, and e is 0 or 1;
-(OC₄F₈)_{c}-(OC₃F₆)_{d}-(OC₂F₄)ₑ-(OCF₂)_{f}- (f2)
wherein c and d are each independently an integer of 0 to 30;
e and f are each independently an integer of 1 to 200;
the sum of c, d, e, and f is an integer of 10 to 200; and
the occurrence order of the respective repeating units enclosed in parentheses provided with the subscript c, d, e, or f is not limited in the formula;
-(R⁶-R⁷)_{g}- (f3)
wherein R⁶ is OCF₂ or OC₂F₄;
R⁷ is a group selected from OC₂F₄, OC₃F₆, OC₄F₈, OC₅F₁₀, and OC₆F₁₂, or is a combination of two or three groups selected from these groups; and
g is an integer of 2 to 100;
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f4)
wherein e is an integer of 1 or more and 200 or less, a, b, c, d, and f are each independently an integer of 0 or more and 200 or less, and the occurrence order of the respective repeating units enclosed in parentheses provided with a, b, c, d, e, or f is not limited in the formula; and
-(OC₆F₁₂)ₐ-(OC₅F₁₀)_{b}-(OC₄F₈)_{c}-(OC₃F₆)_{d}-(OC₂F₄)ₑ-(OCF₂)_{f}- (f5)
wherein f is an integer of 1 or more and 200 or less, a, b, c, d, and e are each independently an integer of 0 or more and 200 or less, and the occurrence order of the respective repeating units enclosed in parentheses provided with a, b, c, d, e, or f is not limited in the formula.

5. The composition according to any one of claims 1 to 4, wherein R⁴ is R^{4a}.

6. The composition according to any one of claims 1 to 5, wherein
R^{4a} is a group represented by the following formula: 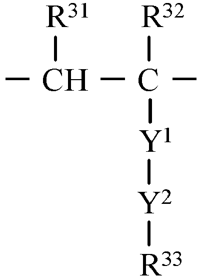 wherein
R³¹ is each independently at each occurrence a hydrogen atom or an alkyl group;
R³² is each independently at each occurrence a hydrogen atom, a chlorine atom, a fluorine atom, or an alkyl group optionally substituted with fluorine;
R³³ is each independently at each occurrence a crosslinkable group;
Y¹ is a single bond, -C(=O)O-, -C(=O)NH-, -OC(=O)-, - NHC(=O)-, -O-, -N(R^{c})-, an aromatic ring, an aromatic ring having a substituent, or carbazolylene;
R^{c} is an organic group; and
Y² is a single bond or a linker having 1 to 16 atoms in a main chain thereof.

7. The composition according to any one of claims 1 to 6, wherein the crosslinkable group is an epoxy group, a glycidyl group, an alicyclic epoxy group, a vinyl group, an allyl group, an optionally substituted acryloyl group, a cinnamoyl group, a 2,4-hexadienoyl group, a vinyl ether group, a hydroxyl group, an oxetanyl group, an isocyanate group, a catechol group, a thiol group, an amino group, an alkylamino group, a dialkylamino group, an azide group, a phosphoric acid-containing group, a carboxyl group, an imidazolyl group, a triazolyl group, a benzotriazolyl group, a tetrazolyl group, a halogen atom, or a silane coupling group, or a precursor group thereof.

8. The composition according to any one of claims 1 to 7, wherein the crosslinkable group is an epoxy group, a glycidyl group, an alicyclic epoxy group, an acryloyl group, or a methacryloyl group.

9. The composition according to any one of claims 1 to 8, wherein n is an integer of 2 to 50.

10. The composition according to any one of claims 1 to 9, wherein
the siloxane polymer is a siloxane polymer represented by the following formula: 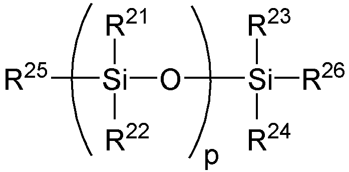 wherein
R²¹ is each independently at each occurrence a hydrogen atom, a C₁₋₆ alkyl group, or an aryl group;
R²² is each independently at each occurrence a hydrogen atom, a C₁₋₆ alkyl group, or an aryl group;
R²³ is a hydrogen atom, a C₁₋₆ alkyl group, or an aryl group;
R²⁴ is a hydrogen atom, a C₁₋₆ alkyl group, or an aryl group;
R²⁵ is a hydrogen atom or a monovalent organic group;
R²⁶ is a hydrogen atom or a monovalent organic group; and
p is any integer.

11. The composition according to claim 10, wherein R²⁵ and R²⁶ are each a C₁₋₆ alkyl group.

12. The composition according to claim 10, wherein
R²⁵ is a C₁₋₆ alkyl group;
R²⁶ is -R²⁷-R²⁸;
R²⁷ is a divalent organic group, an oxygen atom, or a single bond; and
R²⁸ is a hydrogen atom, -OH, -CO-CH=CH₂, -CO-C(CH₃)=CH₂, an epoxy group, an alicyclic epoxy group, an amino group, a carboxyl group, a vinyl group, an alkoxy group, or a thiol group.

13. The composition according to claim 10, wherein
R²⁵ and R²⁶ are each -R²⁷-R²⁸;
R²⁷ is a divalent organic group, an oxygen atom, or a single bond; and
R²⁸ is a hydrogen atom, -OH, -CO-CH=CH₂, -CO-C(CH₃)=CH₂, an epoxy group, an alicyclic epoxy group, an amino group, a carboxyl group, a vinyl group, an alkoxy group, or a thiol group.

14. The composition according to any one of claims 1 to 13, wherein the siloxane polymer has a number average molecular weight of 800 to 8,000.

15. The composition according to any one of claims 1 to 14, wherein a content of the siloxane polymer is 1 to 300 parts by mass based on 100 parts by mass of the fluoropolyether group-containing polymer.

16. A surface-treating agent comprising the composition according to any one of claims 1 to 15.

17. A curable composition comprising:
the composition according to any one of claims 1 to 15, the surface-treating agent according to claim 16; and
a matrix-forming composition.

18. The curable composition according to claim 17, wherein the matrix-forming composition is a composition comprising a compound that is a monofunctional and/or multifunctional acrylate and methacrylate, a monofunctional and/or multifunctional urethane acrylate and methacrylate, a monofunctional and/or multifunctional epoxy acrylate and methacrylate, or a composition comprising a compound that is a monofunctional and/or multifunctional epoxy.

19. A film formed of the composition according to any one of claims 1 to 15, the surface-treating agent according to claim 16, and/or the curable composition according to claim 17 or 18.

20. An article comprising a substrate and a layer on a surface of the substrate, wherein the layer is formed of the composition according to any one of claims 1 to 15, the surface-treating agent according to claim 16, and/or the curable composition according to claim 17 or 18.

21. The article according to claim 20, wherein the article is an optical member.

22. The article according to claim 20, which is a LiDAR cover member.

23. The article according to claim 20, which is a sensor member.

24. The article according to claim 20, which is an instrument panel cover member.

25. The article according to claim 20, which is an automobile interior member.
